# EUROPEAN PATENT SPECIFICATION

(11) **EP 4 096 351 B1**
(45) Date of publication and mention of the grant of the patent: **18.03.2026**
(21) Application number: 22175992.1
(22) Date of filing: 30.05.2022
(51) Int. Cl.: H05B 6/06

(54) **ELECTRIC RANGE AND METHOD FOR CONTROLLING THE SAME**
ELEKTRISCHER BEREICH UND STEUERUNGSVERFAHREN DAFÜR
CUISINIÈRE ÉLECTRIQUE ET SON PROCÉDÉ DE COMMANDE

(30) Priority: 28.05.2021 KR 20210069180
(43) Date of publication of application: 30.11.2022
(73) Proprietor: LG Electronics Inc., SEOUL 07336 (KR)
(72) Inventor: LEE, Ji Won, 08592 Seoul (KR); CHO, Junghyeon, 08592 Seoul (KR); PARK, Myoeng Soo, 08592 Seoul (KR)
(74) Representative: Vossius & Partner Patentanwälte Rechtsanwälte mbB

(56) References cited:
- EP-A1- 3 531 799
- KR-A- 20140 131 118
- KR-B1- 102 158 235
- US-A- 5 448 038

## Description

The present disclosure relates to an electric range, more particularly, to an electric range that can simplify a configuration of a temperature sensing circuit and a configuration of a control circuit board electrically connected to the temperature sensing circuit by connecting in series a thermal fuse ,which detects presence of overheating of a cover plate, to a plate temperature sensor sensing the temperature of the cover plate, thereby reducing manufacturing costs, and a method for controlling the same.

Further, the present disclosure relates to an electric device that can prevent a delay occurring in transmitting data received from a first external electric device to a second external electric device, and a method for controlling the same.

Various types of cooking utensils or electric appliances are used to heat food at home or in a restaurant. Such cooking electric appliances may include gas range using gas and electric ranges using electricity.

An electric range may be largely classified into a resistance heating type and an induction heating type.

An electrical resistance type may generate heat by applying a current to a non-metallic heating element such as a metal resistance wire and silicon carbide, and may heat an object (e.g., a cooking vessel or container such as a pot or a frying fan) by radiating or conducting the generated heat.

An induction heating type may apply high-frequency power to a coil and generate a magnetic field around the coil, and may heat a heating target made of a metal material by using an eddy current generated in the magnetic field.

In other words, when a current is applied to a working coil or a heating coil, a heating target may be induction-heated to generate heat and the heating object may be heated by the generated heat.

A conventional induction heating type electric range having the above configuration includes a heating portion comprising a working coil, and a cover plate disposed over the heating portion.

The cover plate may have a heating target seated thereon to be induction-heated.

The heating portion may include a temperature sensor configured to indirectly measure the temperature of a heating target to be induction-heated, and a fuse configured to sense overheating of the heating portion as a safety device. The temperature sensor and the fuse may be disposed in the heating portion. The temperature of the cover plate is measured to indirectly estimate the temperature of the heating target and detect whether the heating portion is overheated.

In this regard, Korean Patent Laid-Open Publication No. 10-2016-0025170 (Cited document) discloses a configuration for detecting overheat of a heating portion using a fuse disposed in the center of the heating portion.

However, a fuse of the electric range disclosed in Cited document may constitute a circuit separate from the temperature sensor and may be electrically connected to a controller.

Since a separate sensor circuit for the use must be provided, manufacturing cost might increase and configuration of a circuit board on which the controller is disposed might become complicated.

In general, a conventional fuse applied to an electric range is a non-return type fuse that cannot be restored to its original state when an internal circuit of the fuse is opened by overheating. For this reason, there might be a problem with replacing the fuse in order to reuse the electric range.

### [Patent Documents]

Cited Document KR 10-2016-0025170
KR 102 158 235 B1 discloses a hybrid multi range which can provide better cooking quality and insulation performance.

One object of the present disclosure is to provide an electric range that can simplify a configuration of a temperature sensing circuit and a configuration of a control circuit board electrically connected to the temperature sensing circuit by connecting a thermal fuse , which senses presence of overheating of a cover plate, in series to a plate temperature sensor sensing the temperature of the cover plate, thereby reducing manufacturing costs, and a method for controlling the same.

A further object of the present disclosure is to provide an electric range that may restore an original state when an overheating condition is resolved by applying a return type thermal fuse and may automatically resume a stopped operation of a heating portion by detecting a recovery state.

Aspects according to the present disclosure are not limited to the above ones, and other aspects and advantages that are not mentioned above can be clearly understood from the following description and can be more clearly understood from the embodiments set forth herein.

An electric range according to an embodiment may include a cover plate on which a heating target can be disposed; a heating portion comprising a working coil to which high-frequency power is applied and configured to heat the heating target by using a magnetic field generated from the working coil; a plate temperature sensor disposed in the heating portion and configured to sense the temperature of the cover plate; a thermal fuse disposed in the heating portion and configured to sense overheating of the cover plate; and a controller configured to supply electric power to the working coil, to which the plate temperature sensor and the thermal fuse electrically are connected. The plate temperature sensor and the thermal fuse may be connected to each other in series, and connected to the controller to form a temperature sensing circuit. When overheating occurs in the cover plate, the temperature sensing circuit may be opened by the thermal fuse and the controller may be implemented to stop power supply to the working coil.

The plate temperature sensor and the thermal fuse may be separately formed and disposed in the heating portion.

The electric range of claim 1, wherein the plate temperature sensor and the thermal fuse are integrally formed with each other and disposed in the heating portion.

The heating portion may include a first heating portion and a second heating portion that are spaced a preset distance apart from each other. The plate temperature sensor may include a first plate temperature sensor disposed in the first heating portion and a second plate temperature sensor disposed in the second heating portion. The thermal fuse may include a first thermal fuse disposed in the first heating portion and a second thermal fuse disposed in the second heating portion.

The temperature sensing circuit may include a first temperature sensing circuit formed by being connected to the first plate temperature sensor and the first thermal fuse in series and connected to the controller; and a second temperature sensing circuit formed by being connected to the second plate temperature sensor and the second thermal fuse in series and connected to the controller.

When sensing the overheating, the first thermal fuse may open the first temperature sensing circuit, and when the overheating is resolved, the first thermal fuse may restore the first temperature sensing circuit to its original closed state. When sensing the overheating, the second thermal fuse may open the second temperature sensing circuit, and when the overheating is resolved, the second thermal fuse may restore the second temperature sensing circuit to its original closed state,

When power supply to the first heating portion and the second heating portion starts, the controller may separately receive an output signal from the first temperature sensing circuit and an output signal from the second temperature sensing circuit, and the controller determines whether the first temperature and the second temperature sensing circuit are opened based on the received output signals.

Once determining that the first temperature sensing circuit is opened among the first and second temperature sensing circuit, the controller may stop power supply to the working coil of the first heating portion and the working coil of the second heating portion.

After stopping the power supply to the first heating portion, the controller may re-receive an output signal from the first temperature sensing circuit and an output signal from the second temperature sensing circuit, and determine whether the first temperature sensing circuit is restored to the original closed state based on the re-received output signals.

Once identifying that the first temperature sensing circuit is restored to the closed state, the controller may restart power supply to the working coil of the first heating portion and the working coil of the second heating portion.

In a method for controlling an electric range according to an embodiment, the electric range may include a cover plate on which a heating target can be disposed; a heating portion comprising a working coil to which high-frequency power is applied and configured to heat the heating target by using a magnetic field generated from the working coil; a plate temperature sensor disposed in the heating portion and configured to sense the temperature of the cover plate; a thermal fuse disposed in the heating portion and configured to sense overheating of the cover plate; and a controller configured to supply electric power to the working coil, to which the plate temperature sensor and the thermal fuse are electrically connected, wherein the plate temperature sensor and the thermal fuse are connected to each other in series, and connected to the controller to form a temperature sensing circuit. In the method, the temperature sensing circuit may be opened by the thermal fuse and the controller may be configured to stop power supply to the working coil, when overheating occurs in the cover plate.

The plate temperature sensor and the thermal fuse may be separately formed and disposed in the heating portion
The plate temperature sensor and the thermal fuse may be integrally formed with each other and disposed in the heating portion.

The heating portion may include a first heating portion and a second heating portion that are spaced a preset distance apart from each other. The plate temperature sensor may include a first plate temperature sensor disposed in the first heating portion and a second plate temperature sensor disposed in the second heating portion. The thermal fuse may include a first thermal fuse disposed in the first heating portion and a second thermal fuse disposed in the second heating portion.

The temperature sensing circuit may include a first temperature sensing circuit formed by being connected to the first plate temperature sensor and the first thermal fuse in series and connected to the controller; and a second temperature sensing circuit formed by being connected to the second plate temperature sensor and the second thermal fuse in series and connected to the controller.

When sensing the overheating, the first thermal fuse may open the first temperature sensing circuit, and when the overheating is resolved, the first thermal fuse may restore the first temperature sensing circuit to its original closed state. When sensing the overheating, the second thermal fuse may open the second temperature sensing circuit, and when the overheating is resolved, the second thermal fuse may restore the second temperature sensing circuit to its original closed state.

The method for controlling the electric range may include an output signal receiving operation configured to separately receive an output signal from the first temperature sensing circuit and an output signal from the second temperature sensing circuit when power supply to the first heating portion and the second heating portion starts; and a circuit opening determining operation configured to determine whether the first temperature sensing circuit and the second temperature sensing circuit are opened based on the output signals received in the output signal receiving operation.

The method for controlling the electric range may further include a power supply stopping operation configured to the stop power supply to the working coil of the first heating portion and the working coil of the second heating portion, once it is determined in the circuit opening determining operation that the first temperature sensing circuit is opened among the first and second temperature sensing circuit.

The method for controlling the electric range may further include an output signal re-receiving operation configured to separately re-receive an output signal from the first temperature sensing circuit and an output signal from the second temperature sensing circuit, after the power supply to the first heating portion is stopped in the power supply stopping operation; and a circuit restoring determining operation configured to determine whether the first temperature sensing circuit is restored to its original closed state based on the output signals re-received in the output signal re-receiving operation.

The method for controlling the electric range may further include a power re-supplying operation configured to re-start power supply to the working coil of the first heating portion and the working coil of the second heating portion, when it is identified in the circuit restoring determination operation that the first temperature sensing circuit is restored to the original closed state.

The present disclosure may have following advantages and effects. According to the electric range and the method for controlling the same, the pate temperature sensor configured to sense the temperature of a cover plate and the thermal fuse configured to sense overheating of the cover plate may be connected in series to configurate a temperature sensing circuit, thereby simplifying the configuration of a control substrate to which the temperature sensing circuit is electrically connected and reducing manufacture cost.

Further, according to the electric range and the method for controlling the same, the return type thermal fuse may be applied to restore the original state when the overheating is resolved, and the operation of the heating portion may automatically restart by detecting the restored state, thereby improving user convenience.

Specific effects are described along with the above-described effects in the section of Detailed Description.

### [Description of Reference Numerals]

FIG. 1 is an exploded perspective view of an electric range according to an embodiment of the present disclosure;
FIG. 2 is an exploded perspective view showing the other parts of the electric range shown in FIG. 1, except a cover plate;
FIG. 3 is an exploded perspective view of a heating portion and an upper bracket that are shown in FIG. 2;
FIG. 4 is a perspective view showing an assembled state of a base bracket, a control circuit board module and a ventilation module disposed in a case shown in FIG. 2;
FIG. 5 is a perspective view showing a coupled state a control circuit board module and a ventilation module with respect to a base bracket shown in FIG. 4;

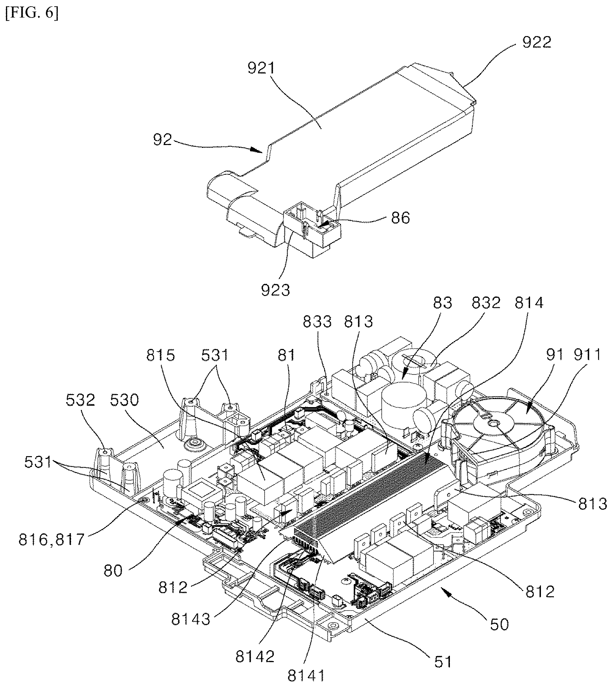

FIG. 6 is an exploded perspective view of an air guide cut away from FIG. 4;
FIG. 7 is a top perspective view of a first heating portion shown in FIG. 2;
FIG. 8 is a bottom perspective view of a first heating portion shown in FIG. 7;
FIGS. 9 and 10 are perspective views of a first temperature sensing portion provided in a first heating portion according to an embodiment of the present disclosure;
FIGS. 11 and 12 are schematic views to describe an inner connection structure of a connector shown in FIGS. 9 and 10;
FIG. 13 is a functional block view to describe a function of a controller provided in an electric range according to an embodiment of the present disclosure; and
FIG. 14 is a flow chart to describe a method for controlling an electric range according to an embodiment of the present disclosure.

The above-described aspects, features and advantages are specifically described hereunder with reference to the accompanying drawings such that one having ordinary skill in the art to which the present disclosure pertains can easily implement the present invention. In the disclosure, detailed descriptions of known technologies in relation to the disclosure are omitted if they are deemed to make explanation of the invention unnecessarily vague. Below, preferred embodiments according to the disclosure are specifically described with reference to the accompanying drawings. In the drawings, identical reference numerals can denote identical or similar components.

The terms "first", "second" and the like are used herein only to distinguish one component from another component. Thus, the components should not be limited by the terms. Certainly, a first component can be a second component unless stated to the contrary.

Throughout the disclosure, each element may be singular or plural, unless stated to the contrary.

Hereinafter, expressions of 'a component is provided or disposed in an upper or lower portion' may mean that the component is provided or disposed in contact with an upper surface or a lower surface. The present disclosure is not intended to limit that other elements are provided between the components and on the component or beneath the component.

It will be understood that when an element is referred to as being "connected with" another element, the element can be directly connected with the other element or intervening elements may also be present. In contrast, when an element is referred to as being "directly connected with" another element, there are no intervening elements present.

A singular representation may include a plural representation unless it represents a definitely different meaning from the context. Terms such as "include" or "has" are used herein and should be understood that they are intended to indicate an existence of several components, functions or steps, disclosed in the specification, and it is also understood that greater or fewer components, functions, or steps may likewise be utilized.

Terms such as "include" or "has" are used herein and should be understood that they are intended to indicate an existence of several components, functions or steps, disclosed in the specification, and it is also understood that greater or fewer components, functions, or steps may likewise be utilized.

Throughout the disclosure, the terms "A and/or B" as used herein can denote A, B or A and B, and the terms "C to D" can denote C or greater and D or less, unless stated to the contrary.

Hereinafter, the present disclosure will be described, referring to the accompanying drawings showing a configuration of an electric range 1 according to an embodiment.

### [Overall Composition of Electric Range]

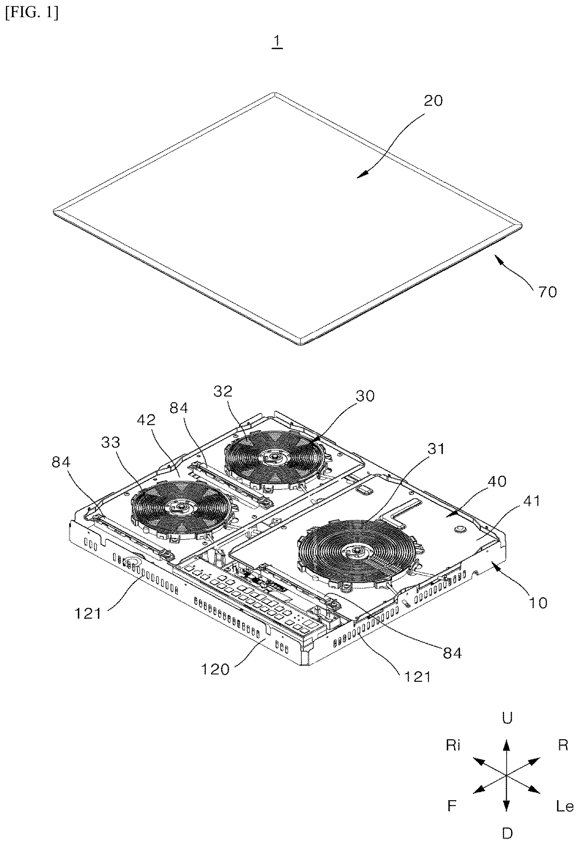

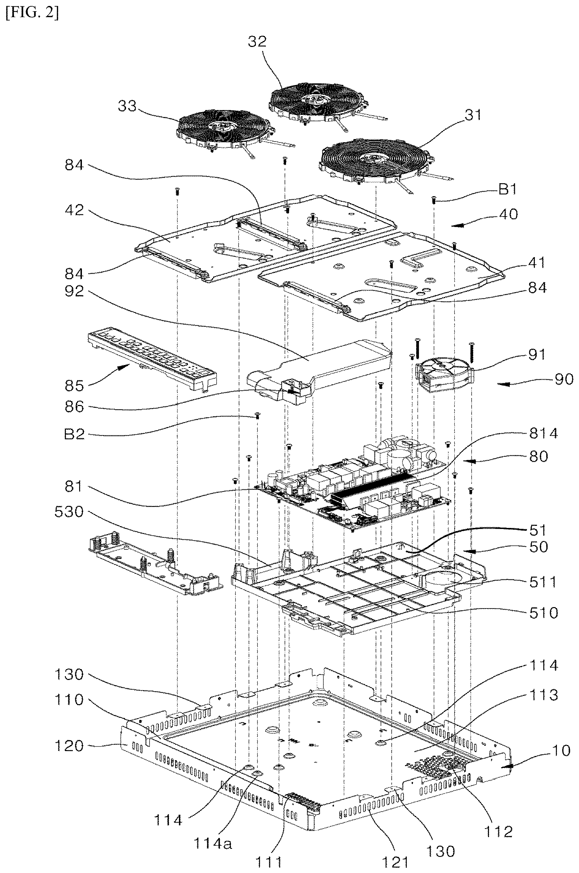

FIG. 1 is an exploded perspective view of an electric range 1 according to an embodiment of the present disclosure, in a state where a cover plate is separated therefrom. FIG. 2 is an exploded perspective view showing the other parts of the electric range shown in FIG. 1, except the cover plate. Referring to FIGS. 1 and 2, the configuration of the electric range 1 according to an embodiment will be described.

The electric range 1 according to this embodiment may be configured to heat a heating target based on an induction heating method. The heating target may be a tableware containing a metal material (e.g., stainless steel and iron).

In the induction heating method, high-frequency power may be applied to a working coil 31 to generate a magnetic field around a working coil 312, 322 and 332 , and an eddy current generated by the magnetic field may be used in heating a heating target made of a metal material.

Specifically, high-frequency power may be applied to a heating portion 30 having a structure in which the working coil 31 is disposed adjacent to a ferrite core, so that a magnetic field may be generated around the working coil 31. When a heating target is placed in an area in the generated magnetic field, an eddy current may be induced in the heating object by the magnetic field and Joule's heat may be generated by the eddy current to heat the heating target. As the heating target is heated, the food contained in the heating target may be heated.

The electric range may include a cover plate 20, a heating portion 30, an upper bracket 40 and a base bracket 50.

The case 10 may be configured to define an exterior of the electric range and protect components composing the electric range. As one example, the case 10 may be made of a lightweight metal material such as aluminum and the present disclosure may not be limited thereto.

Meanwhile, the case 10 may be insulated to suppress heat generated by the working coil 31 from being radiated to the outside.

The case 10 may accommodate components constituting the electric range such as the heating portion 30, the upper bracket 40 and a control board module 90. A top of the case 10 may be open and the open top may be closed by the cover plate 20.

The case 10 may be formed in a box shape by processing a plate-shaped material.

The case 10 may include a first casing 110, a second casing and a third casing 130.

The first casing 110 may define a bottom surface of the case 10. The first casing 110 may accommodate and support the internal components disposed in the above-described electric range in a downward direction (D-direction).

A plurality of forming portions formed by press working may be provided as means for facilitating the accommodation and supporting of the internal components.

A downward forming portion 113 among the plurality of forming portions may be formed by press work to protrude the first casing 110 in a downward direction (D-direction) as a whole. The first casing 110 may be protruded in the downward direction so that a space in a vertical direction (U-direction) may be further secured for the internal components. In addition, the rigidity of the first casing 110 may be further increased.

An upward forming portion 114 may be protruded upward from the downward forming portion 113 (U-direction), and may be formed as a circular bead as shown in the drawing as one example.

The upward forming portion 114 may be formed in a plurality of positions, and may support a lower surface of a base bracket 50 which will be described below to fix the base bracket 50.

A bolt hole 114a may be formed in the upward forming portion 114 to secure the base bracket 50 by using at board securing bolt, so that the board securing bolt may penetrate the bolt hole 114a to extend there through.

Specifically, the board securing bolt for securing the base bracket 50 may have a direction of securing the base bracket 50 from the upper surface to the lower surface (D-direction).

In this instance, since the upward forming portion 114 is protruded from the downward forming portion 113, there may be a margin for preventing the board securing bolt from being extended downward over the first case 110.

Meanwhile, the first casing 110 may include an air inlet hole 112 for drawing air therein and an air outlet hole 111 for discharging air there from, to facilitate the cooling of the control circuit board module 80 provided therein and the circuit elements mounted on the control circuit board module 80.

As shown in FIG. 2, the air outlet hole 111 and the air inlet hole 112 may be provided in the form of a grill, thereby preventing the inflow of foreign substances.

The second casing 120 may be bent from the first casing 110 and configured to define a lateral surface of the case 110.

The second casing 120 may be bent from an edge of the first casing 110 in a vertical direction (U-D direction) to form a side wall of the electric range 1, so that the second casing 120 may be provided to surround the base bracket which will be described later.

The second casing 120 may be formed on each side of the first casing 110 formed in a substantially quadrangular shape. The second casing 120 may reinforce the rigidity of the entire case 10.

Specifically, the second casing 120 bent from the first casing 110 may be configured to suppress the plate-shaped first casing 110 from being bending or damaged by the weight of the internal components or an external force.

The second casing 120 may further include a ventilation hole 121 formed in a slit shape and it may be provided in plurality. The plurality of ventilation holes 121 may facilitate communication between the inside and the outside of the case 100 so that air may flow through the ventilation holes 121, thereby contributing to cooling of the internal components provided in the case 10.

Meanwhile, a supporting flange 130 may be provided in an upper end of the second casing 120.

The supporting flange 130 may be bent from the upper end of the second casing 120 toward the inside of the case 10, and may serve to support the upper bracket 140, which will be described later, from the lower surface. For example, the supporting flange 130 may be formed in a plurality of positions by bending upper ends of a left surface, a right surface and a rear surface of the second casing 110. A securing hole 131 for bolting fastening may be provided in each of the supporting flanges 130.

A bottom surface of the upper bracket 40 may be disposed on an upper surface of the supporting flange 130. The upper bracket 40 and the supporting flange 130 may be coupled to each other by a securing means such as a bracket securing bolt B1. Preferably, a left side end and a rear end of the first upper bracket 41 and a right side end and a rear end of the second upper bracket 42 may be supported and coupled to each other by the supporting flange 130. Here, the right side end of the first upper bracket 41 and the left side end of the second upper bracket 42 may be supported by a supporting bracket 530 which will be described later.

Meanwhile, the cover plate 20 may be coupled to an upper end of the case 10 and a heating target may be placed on the upper surface of the cover plate 20. The cover plate may be configured to close the open top of the case 10 to protect the internal components of the case 10.

The heating target may be put on the upper surface of the cover plate 20 and a magnetic field generated from the heating portion 30 may pass through the cover plate to reach the heating target. For example, the cover plate 20 may be made of a material having excellent heat resistance such as ceramic or tempered glass, but it is not limited thereto.

An input interface (not shown) configured to receive an operation input from the user may be provided on the upper surface of the cover plate 20. The input interface may be disposed on a predetermined area of the upper surface of the cover plate 20 and display a specific image.

The input interface may receive a touch input from the user and the electric range 1 may be operated based on the received touch input.

For example, the input interface may be a module configured to input a desired heating intensity or heating time by a user, and may be implemented as a physical button or a touch panel.

A touch circuit board module 85 configured to receive a user's touch manipulation input may be provided under the input interface, that is, under the cover plate 20. The touch circuit board module 85 may include a plurality of key switches 851 and a touch circuit board 851 on which and the plurality of key switches 851 are mounted. The user can input a command to the touch circuit board module 85 via the key switches 851 to control the operation of the electric range 1.

In the electric range 1 according to an embodiment of the present disclosure, an upper surface of the touch circuit board module 85 may be in close contact with a lower surface of the cover plate 20. At this time, the touch circuit board module 85 may be disposed at a position corresponding to the input interface.

The touch circuit board module 85 and the input interface may be connected to each other by a capacitive touch input method. Accordingly, when the user inputs a control command to the input interface, the control command may be input to the touch circuit board module 85.

In addition, a display may be provided on a predetermined area of the upper surface of the cover plate 20 and configured to display an operation state of the electric range 1.

A light display region may be formed on the upper surface of the cover plate 20. An LED substrate module 84 may be disposed under the cover plate 20, corresponding to the light display region. The light irradiated from the LED substrate module 84 may be transmitted to the user via the light display region. For example, the LED substrate module 84 may be fixedly disposed on an upper bracket 40 which will be described later. The upper bracket 40 may include a plurality of substrate supporting portions 417 and 427 to support the LED substrate module 84.

At this time, the light display region and the LED substrate module 85 may be disposed in positions corresponding to each other. When a plurality of LED substrate modules 84 are provided, the same number of light display regions may be disposed on the upper surface of the cover plate 20.

Meanwhile, the electric range 1 according to one embodiment of the present disclosure may further include a cover bracket 70 configured to support the cover plate 20 and connect the cover plate 20 to the case 10.

As shown in FIG. 1, the cover bracket 70 may be disposed on the outside of the upper bracket 40 and the case, and may be coupled to the case 10, to support the cover plate 20. For example, the cover bracket 70 may be coupled to the case by a securing means such as the case securing bolt (not shown).

A plurality of cover brackets 70 may be provided and each of the cover brackets 70 may be disposed on a position corresponding to each side of the cover plate 20 formed in a quadrangle. As one example, a total of fourth cover brackets 70 may be disposed on respective sides of the rectangular cover plate 20.

Meanwhile, the heating portion 30 may be provided in plural and disposed under the cover plate 20, to heat a heating target.

A total of three heating portions 30 are shown in the accompanying drawings.

The plurality of heating portions 30 may be all provided in the induction heating method, or one or more of the heating portions 30 may be heating devices using the induction heating method and the other ones thereof may be heating devices using an electric resistance heating method, so that the electric range 1 may be configured as a so-called hybrid range.

Hereinafter, the electric range 1 including the plurality of heating portions 30 all using the induction heating method will be described.

In this instance, the plurality of heating portions 30 may be configured to have the same heating capacity or different heating capacities from each other.

The accompanying drawings show an example of the plurality of heating portions including a first heating portion 31, a second heating portion 32 and a third heating portion 33, and the present disclosure may not be limited thereto. The following explanation is based on the three heating portions 31, 32, 33 that have different heating generation capacities.

The first heating portion 31 may be secured to the first upper bracket 41. The second heating portion 32 and the third heating portion 33 may be secured to the second upper bracket 42.

The heating portions 31, 32 and 33 may include core frames 311, 322, 332, respectively, in common. The working coils 312, 322 and 332 may be spirally wound around upper surfaces of the core frames 311, 321, 331, respectively, and ferrite cores 313, 323 and 333 may be mounted on lower surface of the core frames 311, 321 and 331, respectively. Accordingly, when high-frequency power is applied to the working coils 312, 322 and 332, a magnetic field may be formed around the ferrite core 313, 323 and 333, and an eddy current may be formed in a heating target by the formed magnetic field.

Each of the working coils 312, 322 and 332 may include a pair of outgoing wires 312a, 322a and 332a, and an outgoing tip terminal may be provided at ends of each lead wire 312a, 322a and 332a.

A temperature sensing portion 60 may be provided in the center of each heating portion 31, 32 and 33. More specifically, a first temperature sensing portion 61 may be provided in the first heating portion 31 and a second temperature sensing portion 62 may be provided in the second heating portion 32. A third temperature sensing portion 63 may be provided in the third heating portion 33.

At this time, the first temperature sensing portion 61 may include a first plate temperature sensor 611 configured to sense the temperature of the cover plate 20 directly above the first heating portion 31, a first thermal fuse (not shown) configured to detect whether the temperature of the cover plate 20 increases above a preset threshold temperature, a first coil temperature sensor 612 configured to sense the temperature of the first working coil 312, and a first sensor holder 614 in which the first plate temperature sensor 611 and the third thermal fuse (not shown) are mounted.

Similarly, the second temperature sensing portion 62 and the third temperature sensing portion 63 may have substantially the same configuration as the first temperature sensing portion 61, respectively. The second temperature sensing portion 62 may include a second plate temperature sensor, a second coil temperature sensor, a second thermal fuse 623 and a second sensor holder 624. The third temperature sensing portion 63 may include a third plate temperature sensor 631, a third coil temperature sensor 632, a third thermal fuse 633 and a third sensor holder 634.

The first to third plate sensors may be configured to directly contact the lower surface of the cover plate 20 so as to measure the temperature of the cover plate 20. The sensing surfaces may be disposed to maintain a contact state with the lower surface of the cover plate 20 at all times.

The first to third coil temperature sensors may be disposed on the lower surfaces of the working coils 312, 322 and 332, and may directly contact the working coils 312, 322 and 332 so as to measure the temperature of the working coils 312, 322 and 332. The sensing surfaces may be disposed to maintain a contact state with the working coils 312, 322 and 332 at all times.

The first to third fuses may serve as a kind of a thermostat configured to disconnect an internal circuit when the temperature of the cover plate 20 increases above a preset threshold temperature. When internal circuits of the first to third thermal fuses are cut off, the power supplied to the working coils 312, 322 and 332 may be immediately cut off to discontinue the operation of the heating portions 31, 32 and 33 in which overheating occurs.

Meanwhile, those heating portions 31. 32 and 33 may be disposed on and supported by the upper bracket 40. As in an example shown in the drawing, the upper bracket 40 may be provided in plurality. Preferably, the upper bracket 50 may include a first upper bracket 41 supporting the first heating portion 31 and a second upper bracket 42 supporting the second heating portion 32 and the third heating portion 33.

The upper bracket 40 may be made of a lightweight metal material (e.g., aluminum), and the present disclosure may not be limited thereto.

The first upper bracket 41 may include a first upper plate 411 and a second upper plate 412. The first upper plate 411 may define a bottom surface of the first upper bracket 41 and the first heating portion 31 may be mounted on the first upper plate 411.

Likewise, the second upper bracket 42 may include a first upper plate 421 and a second upper plate 422. The first upper plate 421 may define a bottom surface of the second upper bracket 42, and the second heating portion 32 and the third heating portion 33 may be mounted on the first upper plate 421.

The first upper plate 411 of the first upper bracket 41 and the first upper plate 421 of the second upper bracket 42 may completely cover a main circuit board module 83 and a power circuit board module 83 provided under the firs upper plate in the vertical direction (U-D direction).

Due to this structure, the first upper plate 411 of the first upper bracket 411 and the first upper plate 421 of the second upper bracket 42 may serve to shield the electromagnetic field and electromagnetic waves generated from the heating portion 30 from reaching elements mounted on the main circuit board module 81 and the power circuit board module 83.

Specifically, the first upper bracket 41 and the second upper bracket 42 may be configured to improve electromagnetic compatibility (EMC) and electromagnetic interference (EMI) performance of the printed circuit board 51.

The second upper plate 412 of the first upper bracket 41 and the second upper plate 422 of the second upper bracket 422 may be bent from respective first upper plates 411 and 421 in the vertical direction (U-D direction) of the electric range 1.

As shown in the drawing, the second upper plates 412 and 422 may be formed in sides of the first upper plates 411 and 421 formed in a substantially quadrangular shape.

The rigidity of the first upper bracket 41 and the second upper bracket 42 may be reinforced as a whole by the second upper plates 412 and 422. That is, the second upper plates 412 and 422 may suppress the plate-shaped first upper plates 411 and 421 from being bent or damaged by the weight of the internal components including the heating portion 30 or an external force.

Meanwhile, each of the first upper plates 411 and 421 may include the pair of outgoing wires 312a, 322a and 332a mentioned above, and a plurality of insertion holes penetrated by lead wires (not shown) of the temperature sensing portion 60 to be extended. For example, the plurality of insertion holes may include a first insertion hole 414 and 424 through which one of the pair of the outgoing wires 312a and 322a and 332a passes, and a second insertion hole 415 and 425 through which the other one of the outgoing wires passes, and a third insertion hole 416 and 426 through which the lead wire of the temperature sensing portion 60 passes.

The pair of lead wires 312a and 322a and 332a and the lead wire of the temperature sensing portion 60 may pass through the insertion holes and extended in the downward direction (D-direction), thereby electrically connected to the control circuit board module 80.

In addition, the first upper plate 411 and 421 may include a plurality of forming portions protruded in the upward direction (U-direction) or the downward direction (D-direction).

The forming portion protruded in the downward direction (D-direction) may be referred to as an anti-pressing forming portion 411a and 421a. The anti-pressing forming portion may serve to prevent the lead wires 312a, 322a extended outward in a radial direction (r-direction_ from the center of each heating portion 31, 32 and 33 among the pair of lead wires 312a, 322a and 332a from being pressed in the mounting process of the heating portions 31, 32 and 33. Specifically, the anti-pressing forming portion 411a and 421a may serve as a passage for the outgoing wire 312a, 322 and 332a extended outward from the center of the heating portion 31, 32 and 33.

The forming portion protruded in the upward direction (U-direction) may be referred to as a securing forming portion 413. At the same time, it may support the heating portion 31, 32 and 33, and may prevent the securing means such as bolts from being extended in the downward direction (D-direction) after passing through the first upper plate 411 and 421. In other words, the securing forming portion 413 may provide a margin for preventing the securing means (e.g., bolts) from interfering with the control board circuit module 80 disposed in the downward direction (D-direction).

A LED substrate module 84 may be disposed on each of the first upper bracket 41 and the second upper bracket 42. Substrate support portions 417 and 427 for supporting the LED substrate module 84 may be formed in the first upper plate 411 of the first upper bracket 41 and the first upper plate 421 of the second upper bracket 421, respectively. The substrate supporting portions 417 and 427 may be formed by partially cutting-away the first upper plate 411 of the first upper bracket 41 and the first upper plate 421 of the second upper bracket 42.

In the example shown in the drawing, one substrate supporting portion 417 may be provided in the first upper bracket 41 on which the first heating portion 31 is disposed. Two substrate supporting portions 427 may be formed in the first upper bracket 41 on which the second heating portion and the third heating portion are disposed.

A plurality of LEDs may be aligned on the LED substrate module 84. The plurality of LEDs may be luminescent when the heating portion 30 is turned on so that the user may be visually informed of whether the heating portion 30 is in operation or an operation state.

The LED substrate module 84 may change the luminescent shape, color, etc. of the plurality of LEDs to inform the user whether or not the electric range 1 is operating and the operation state.

The base bracket 50 may be disposed under the first upper bracket 41. A main circuit board module 81, a power circuit board module 83 that consists the control circuit board module 80 may be mounted on the base bracket 50. The base bracket 50 may be configured to support the main circuit board module 81, the power circuit board module 83 and the ventilation module 90.

The upward forming portions 114 formed in the first casing 110 may support the lower surface of the base bracket 50 at a plurality of positions.

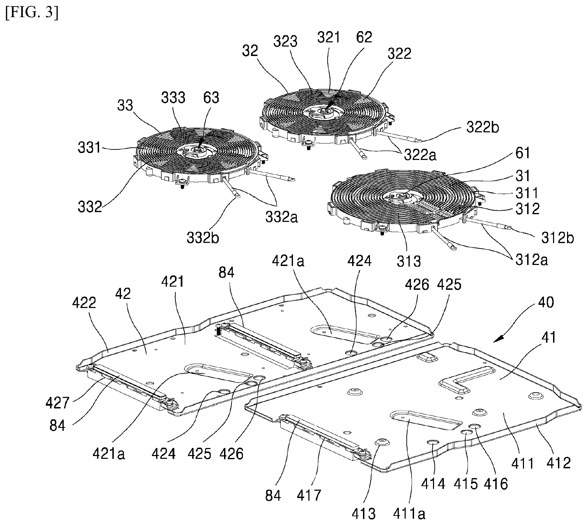

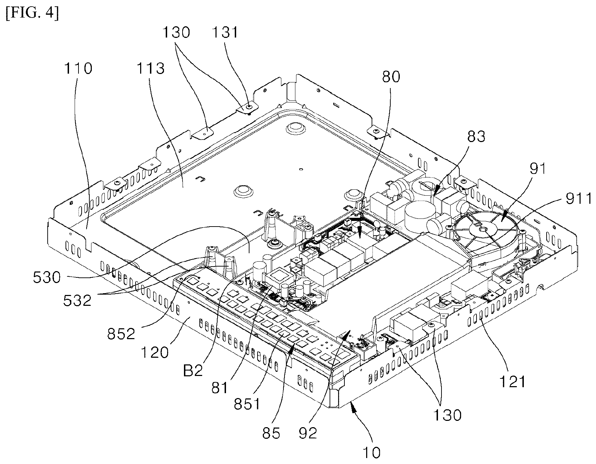

As shown in FIGS. 3 and 4, the base bracket 50 may include a substrate bracket 51 including a bottom plate 510 and a lateral plate 520.

The bottom plate 510 may define a bottom surface of the base bracket 50. The main circuit board module 81, the power circuit board module 83 and the ventilation module 90 may be mounted on an upper surface of the bottom plate 510.

Substrates 811 and 831 provided in the main circuit board module 81 and the power circuit board module 83 may be secured to the bottom plate 510 via a plurality of substrate securing bolts B2. The substrate securing bolt B2 may be extended to the upward forming portion 114 of the first casing 110 to be screw-fastened. The substrates 811 and 831 of the main substrate module 81 and the power circuit module 83 and the bottom plate 510 may be secured to the upward forming portion 114 of the first casing 110 by using the substrate securing bolt B2 at the same time.

Furthermore, any one of the substrate securing bolts B2 may be configured to act as a grounding means for grounding the main circuit board module 81 and the power circuit board module 83. For example, as shown in FG. 4, a copper-foil-shaped ground terminal 817 may be formed around a bolt hole 816 of the main circuit board module 81 through which the board securing bolt is extended, and a head of the substrate securing bolt may be electrically connected to the ground terminal 817. A stem of the board securing bolt may be physically and electrically connected to the upward forming portion 114 of the first casing 110. Through such a simple configuration, the main circuit board module 81 may be effectively grounded to the first casing 110 by the board securing bolt. Although not shown, the same type of a ground terminal (not shown) may be provided in any one of the plurality of bolt holes 833 formed in the power circuit board 831.

Meanwhile, the lateral plate 520 may be extended in the upward direction (U-direction) of the electric range 1 from a lateral surface edge of the bottom plate 510.

The lateral plate 520 may serve to reinforce the rigidity of the entire base bracket 50. That is, the lateral plate 520 may suppress the plate-shaped bottom plate 510 from being bent or damaged by the weight of the internal components (e.g., the circuit board) or the external force. Further, the lateral plate 520 may also serve to protect the main circuit board module 81, the power circuit board module 83 and the ventilation module 90 from the external force applied to the bottom plate 510 in the lateral direction or front-rear direction (F-R direction). For that, the lateral plate 520 may be protruded to a position higher than a position in the vertical direction (U-D direction) of at least the main circuit board 811 and the power circuit board 831.

Meanwhile, a supporting bracket 530 configured to support the first upper bracket 41 and the second upper bracket described above may be provided in a position corresponding to the center of the electric range 1.

The supporting bracket 530 may be provided parallel to the lateral surface of the substrate bracket 51 and the right surface with respect to the drawing. Preferably, the supporting bracket 530 may be integrally formed with the substrate bracket 51. At this time, the supporting bracket 530 may be integrally formed with the substrate bracket 51, but may be configured to be easily decoupled from each other by an external force. For example, a connection portion between the supporting bracket 530 and the substrate bracket 51 may have a relatively weak strength.

The supporting bracket 531 may include a plurality of supporting bosses 531 extended in the upward direction (U-D direction) from a bottom surface a first upper bracket toward the first upper bracket 41 and the second upper bracket 42 described above.

As mentioned above, left and rear ends of the first upper bracket 41 and right and rear ends of the second upper bracket 42 may be supported by and coupled to the supporting flanges 130.

The right end of the first upper bracket 41 and the left end of the second upper bracket 42 may be supported and secured by the supporting bosses 531 of the supporting bracket 530. To couple the right end of the first upper bracket 41 and the left end of the second upper bracket 42 to each other, a coupling hole 532 may be formed in an upper end of each supporting boss 531.

In the example shown in the drawing, a total of five supporting bosses 531 may be provided in the supporting bracket 530. Not all of the five supporting bosses 531 may be used in coupling the right end of the first upper bracket 41 and the left end of the second upper bracket 42. For example, only three supporting bosses 531 out of the five supporting bosses 531 may participate in the coupling between the first upper bracket 41 and the second upper bracket 42.

The other supporting bosses 531 not used in the coupling according to the illustrated example may be used when the supporting bracket 530 supports the first upper bracket 41 and the second upper bracket 42 at a different position in another example. Specifically, when applied to another example of an electric range having a larger size than the electric range described above, the supporting bracket 530 may be decoupled from the substrate bracket 51 and moved to another position to be used. When the supporting bracket 530 is applied to the larger-sized electric range, the other supporting bosses 531 not used in the coupling in this example may be used.

The supporting bracket 530 is configured to be applicable to other examples, thereby facilitating the parts sharing and reducing manufacturing cost.

As described above, the main circuit board module 81 and the power circuit board module 83 that constitute the control circuit board module 80 may be mounted on the base bracket 50. Although not limited thereto, the control circuit board module 80 can be understood as a higher concept including the above-noted LED substrate module 84, the touch circuit board module 85 and the wireless communication substrate module 86 rather than the main circuit board module 81 and the power circuit board module 83.

As shown in FIGS. 3 and 4, the main circuit board module 81 may include a controller configured to the overall operation of the electric range 1, and may be electrically connected to the touch circuit board module 85 and the LED substrate module 84 described above.

Accordingly, the main circuit board module 81 may receive a user' manipulation through the touch circuit board module 85 or a user's manipulation through the wireless communication board module 86 wirelessly or wiredly. The main circuit board module 81 may transmit operational information and status information to the LED substrate module 84 and a user's mobile terminal (not shown).

In addition, on the center of the main circuit board 811 may be mounted a CPU provided as a controller (i.e., a microcontroller, a microcomputer or a microprocessor), a plurality of switching elements 812 configured to convert the power received from the power circuit board module 83 into high-frequency power and supply the converted power to the working coils 312, 322 and 332, and a bridge circuit element 813. The plurality of switching elements 812 may serve as a power converting module.

A plurality of insulated gate bipolar transistors (IGBT) may be applied as the switching elements. However, the IGBT type switching element 812 is a very heat-generating component. If such generated heat is not maintained at an appropriate level, the life span of the switch element 812 will be shortened or a malfunction of the switch element is highly likely to occur.

As a means for cooling the switching element 812, a heat sink 814 configured to absorb heat generated in the plurality of switching elements 812 and the bridge circuit element 813 may be mounted on the main circuit board 811.

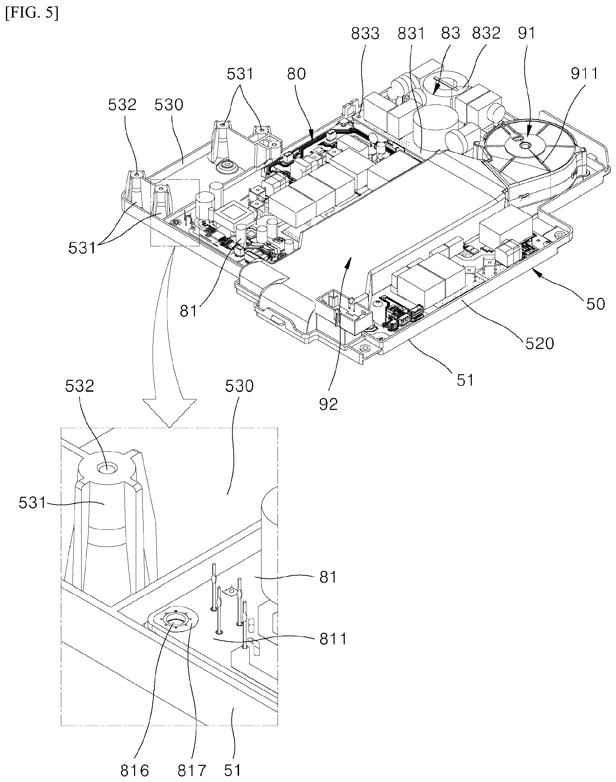

As shown in FIG. 5, the heat sink 814 may include a hexahedral main body 8141 extended along the front-rear direction (F-R direction) of the electric range 1, and a plurality of heat dissipation fins 8143 extended toward the main circuit board 811 from a lower surface of the body 8141.

An upper surface of the main body 8141 may be formed in a plane parallel to the main circuit board 811, and both lateral surfaces of the main body 8141 may be formed as inclined surfaces having a downward inclination.

The switching elements 812 and the bridge circuit element 813 may be attached to the both lateral surfaces having the downward inclination. Accordingly, the heat generated by the switching element 812 and the bridge circuit element 813 may be conducted through both lateral surfaces of the main body 8141.

Meanwhile, a flow channel 8142 may be provided in the main body 8141, and extended in a straight line through front and rear surfaces of the main body 8141. The air may flow along the airflow channel 8142 to a ventilation fan-motor assembly 91 which will be described later. The heat from the switching elements 812 and the bridge circuit element 813 to be conducted may be partially absorbed to the air flow inside the airflow channel 8142.

Meanwhile, concavities and convexities (or unevennesses) may be formed on an inner surface of the airflow channel 8142 and an upper surface of the main body 8141 to expand the contact area for the air flow. The unevenness may be extended in a straight line along the air flow direction, that is, in the front-rear (F-R direction) to minimize the flow resistance.

The plurality of heat dissipation fins 8143 may be protruded from the lower surface of the main body 8141 and extended in the straight line, spaced a constant distance apart from each other. Accordingly, an air passage may be formed between each two neighboring heat dissipation fins adjacent to each other.

Some of the heat dissipation fins, in particular, the ones disposed adjacent to both lateral sides of the lower surface of the main circuit board 811 may directly contact the main circuit board 811. The ones of the heat dissipation fins may serve to support the heat sink 814 as a whole.

In a state where the plurality of switching elements 812 and the bridge circuit element 813 are attached to the heat sink 814, the heat sink 814 may be covered by an air guide 92 which will be described later.

The heat sink 814 may be spatially separated from other circuit elements outside the air guide 92 by the air guide constituting a ventilation module 90, and a cooling passage only for the heat sink may be formed by the air guide 92.

As shown in the drawing, a plurality of filter elements 815 may be disposed in a periphery of the air guide 92 to remove noise included in power output from the power circuit board module 83, which will be described later.

The power circuit board module 83 may be disposed behind the main circuit board module 81. In general, the power circuit board module 83 may be modularized by mounting a high voltage device known as a switching mode power supply (SMPS) on the power circuit board 831. The power circuit board module 83 may convert external power into a stable-stated power before it is supplied to the switching elements 812.

A ventilation fan-motor assembly 91 constituting the ventilation module 90 may be disposed behind the main circuit board module 81, preferably, on the base bracket 50 disposed behind of the heat sink 814.

The ventilation fan-motor assembly 91 may be configured to absorb external air drawn via the air inlet hole 112 of the above-mentioned first casing 110 and the through-hole 511 of the base bracket 50, and blow the air into the air guide 92.

As shown in the drawings, a ventilation fan applied to the ventilation fan-motor assembly 91 may have no limitations, but a sirocco fan may be preferable in consideration of location and spatial restrictions in which the ventilation fan is mounted. When the sirocco fan is applied, external air may be absorbed in from a bottom of the sirocco fan in a direction parallel to a rotation shaft, and the air may be accelerated and discharged radially outward.

To improve air ventilation efficiency, an outlet end 911 of the ventilation fan may be directly connected to an inlet of the air guide 92, and external air forcedly flown by the ventilation fan may be drawn into the air guide as a whole.

The air guide 92 may include a guide body 921 having a U-shaped cross-section and formed in a box shape in which a lower surface is open as a whole.

The heat sink 814 may be mounted in an internal U-shaped space and the cooling passage dedicated to the heat sink 814 may be formed to blow the external air blown through the above-mentioned ventilation fan.

The guide body 921 may be disposed to correspond to the shape in which the heat sink 814 is disposed. When it is extended along the front-rear direction (F-R direction) of the electric range 1 as shown in FIG. 5, the heat sink 815 may be correspondingly arranged in a shape extended along the front-rear direction (F-R direction) of the electric range.

The rear surface of the guide body 921 may be partially open and the open rear surface may serve as an air introduction hole 922 for introducing the external air blown by the ventilation fan.

Unlike the rear surface, a front surface and a lateral surface of the guide body 921 may be completely closed, and may perform a function of a partition wall configured to prevent the introduced external air from leaking to the outside.

The external air introduced into the cooling passage formed in the guide body 921 may flow forward while performing heat-exchange with the heat sink 814, and the flow direction of the external air may be guided by the guide body 921 to finally flow in the downward direction (D-direction), thereby finally being discharged to the outside through the air outlet hole 111 of the first casing 110.

Meanwhile, a substrate mounting portion 923 may be integrally formed with a front surface of the guide body 921, preferably, a front left area of the front surface. The substrate mounting portion 923 may be protruded from the front left area in the upward direction (U-direction).

The substrate mounting portion 923 may accommodate the above-mentioned wireless communication substrate module 86. The position of the substrate mounting portion 923 may be determined as a position which can minimize the influence of high-frequency noise generated by the heating portion 30 and the switching elements 812. The position that is the most distant from the heating portion 30 and the switching elements 812 may be selected.

### [Detailed Configuration of Heating portion]

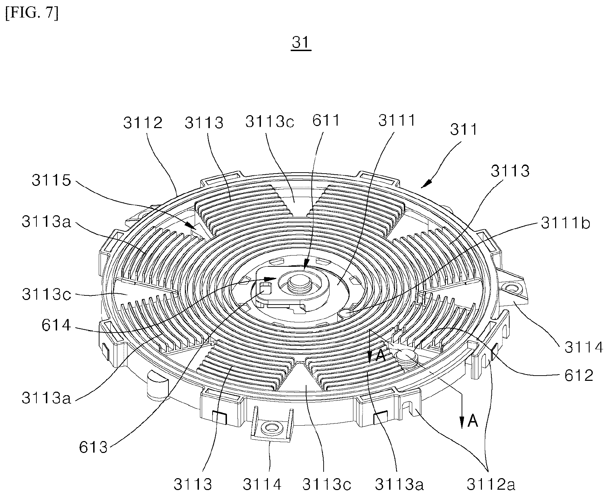

Referring to FIG. 7, specific configuration of the heating portion 30 provided in the electric range 1 according to an embodiment of the present disclosure will be described.

Hereinafter, referring to FIG. 7 or more, the first heating portion 31 will be exemplarily described among the first to third heating portions 31, 32 and 33 constituting the heating portion 30. Unless otherwise described below, the configuration of the first heating portion 31 may be almost identically applicable to the second heating portion 32 and the third heating portion 33, and the description of overlapping contents is omitted.

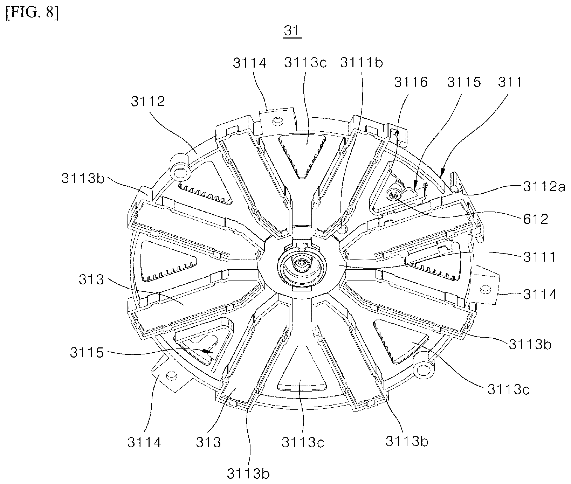

Referring to FIGS. 7 and 8, the first heating portion 31 may include a working coil 312, a core frame 311 and the ferrite core 313.

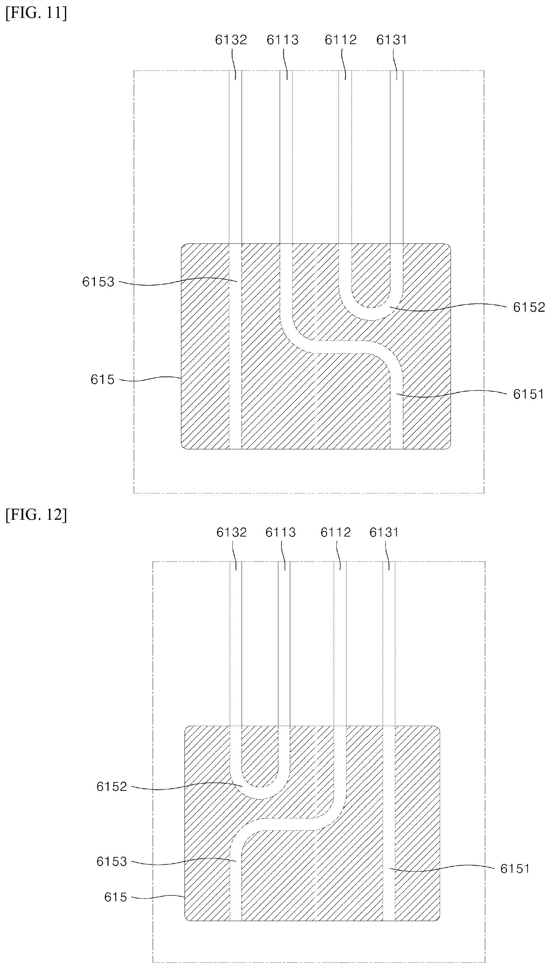

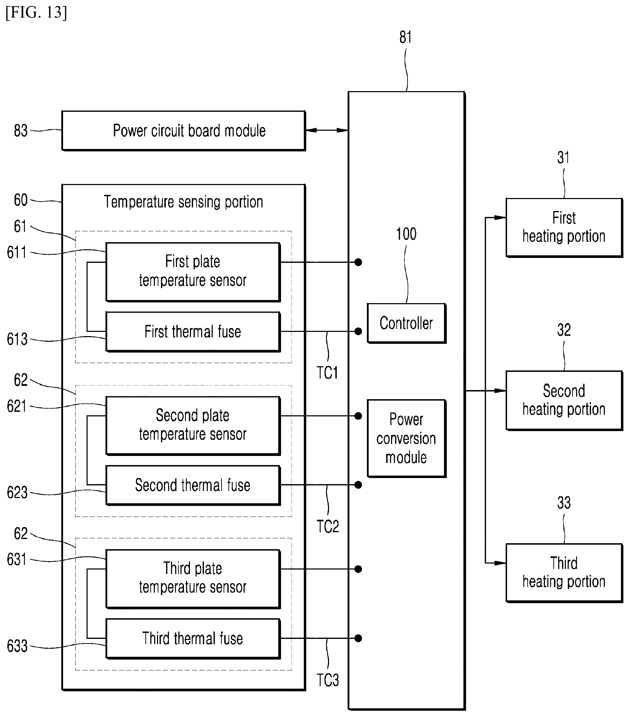

In FIGS. 7 and 8, the working coil 312 is omitted to describe the structure of the first heating portion 31 clearly. However, since the first heating portion 31 on which the working coil 312 is wound is shown in other drawings (e.g., FIGS. 12 and 13), there will be no difficulty in understanding the present disclosure.

As shown in the drawings, the core frame 311 may be formed in a hollow cylindrical shape with an empty interior as a hole, and a lower surface thereof may be entirely open.

The working coil 312 may be spirally wound on an upper surface of a disk portion 3111 corresponding to the upper surface of the core frame 311. To facilitate the spiral winding of the working coil 312, a guide rail 3113 may be provided on an upper surface of the disk portion 3111 and the guide rail 3113 may be extended in a spiral shape while proceeding from the radial direction (R-direction) outside of the disk portion 3111 toward the radial direction (R-direction) inside thereof.

The guide rail 3113 may be formed to have a predetermined height in the upward direction (U-direction) from the upper surface of the disk portion 3111. A radial track 3113a may be provided between neighboring guide rails 3113 and the working coil 312 may be accommodated in the radial track 3113a.

The height of the protruded area of the guide rail 3113 may be greater than a diameter of the working coil 312 not to expose the working coil 312 in the upward direction (U-direction). In addition, when the working coil 312 is wound several times in multiple layers, the height of the guide rail 3113 may be corresponding to the number of layers of the working coil 312.

An upper end of the guide rail 3113 may be in directly contact with the lower surface of the cover plate 20 described above, and may be configured to support the load of a heating target which will be placed on the upper surface of the cover plate 20.

Meanwhile, the core frame 311 of the disk portion 3111 may include a through hole 311 formed in the vertical direction (U-D direction). In this instance, the through hole 3113c may penetrate up to the guide rail 3113. That is, the through hole 3113c may facilitate communication between the inside and the outside of the core frame 311.

At this time, the through hole 3113c may be formed between core accommodating portions which will be described later. Specifically, the disk portion 3111 and the guide rail 3113 provided between neighboring core accommodating portions 3113b may be partially opened in the vertical direction (U-D direction) by the through hole 3113c.

As shown in FIGS. 7 and 8, a total of eight core accommodating portions 3113b may be provided as one example, and a total of eight through-holes 3113c may be formed correspondingly. The number of the core accommodating portions 3113b and the number of the through holes 3113c may be applied differently based on the size and heat generation load capacity of the first heating portion 31. The preset disclosure may not be limited thereto, but will be described based on an exemplary embodiment in which a total of eight through holes 3113c are provided.

As shown in the drawings, each through hole 3113c may be provided in a polygonal shape that gradually increases in width while proceeding outward in the radial direction (r-direction), and may be provided in a fan shape as one example. Such a shape of the through hole 3113c may be selected from any one that avoids the shape of the core accommodating portion 3113b and the shape of the ferrite core 313.

As mentioned above, the inside and the outside of the through hole 3113c may be in communication with each other by the through hole 3113c. Accordingly, the through hole 3113c may function as a passage through the heat transferred from the cover plate 20 and the heat generated from the working coil 312 can escape to the outside without being trapped inside the core frame 311.

Meanwhile, a cable guide wall 3116 may be provided under the disk portion 3111 of and the cable guide wall 3116 may be protruded in the downward direction (D-direction) along a circumference of the through hole 3113c. The cable guide wall 3116 may partition off the lead wire of the first thermal fuse and the outgoing wire (322a, see FIG. 3) of the working coil 322 from each other and guide them, thereby forming an extension passage thereof. The extension passage of the lead wires and the outgoing wires may be formed together by the cable guide wall 3116 and an accommodation wall of the core accommodating portion 3113b.

As shown in the drawings, a sensor bracket 3115 may be formed in the through hole 3113c and a first coil temperature sensor 612 may be disposed in the through hole 3113c.

The sensor bracket 3115 may be formed in a flat plate shape extended from an inner circumferential surface of the through hole 3113c to the inside of the through hole 3113c.

Meanwhile, the working coil 312 wound around the guide rail 3113 in the radial direction and generating a magnetic field by using the received high-frequency power may be made of Ritz wire having excellent durability as one example, and the present disclosure may not be limited thereto.

In the center of the disk portion 3111 of the core frame 311 may be formed a circular area in which the guide rail 3113 is not formed, in other words, a circular area in which the working coil is not wound.

A coupling hole 3111a may be formed in the center of the circular area and the coupling hole 3111a may penetrate the disk portion 3111 in the vertical direction (U-D direction).

A first sensor holder 614 may be disposed in the coupling hole 3111a. The first plate temperature sensor 611 and the first thermal fuse (not shown) that constituting the first temperature sensing portion 61 may be held in the first sensor holder 614.

As shown in FIGS. 7 and 8, the first sensor holder 614 may include a second holder 6141 for holding the fist plate temperature sensor 611 and a second holder 6142 for holding the first thermal fuse.

The second holder 6141 may be formed in a hollow cylindrical shape and the second holder 6142 may be formed in a box shape coupled to a lateral surface thereof. The second holder 6141 and the second holder 6142 may be integrally formed with each other, and may be made of a material having a predetermined elasticity to elastically support the first plate temperature sensor 611 and the first thermal fuse and having heat resistance suitable for a high temperature environment.

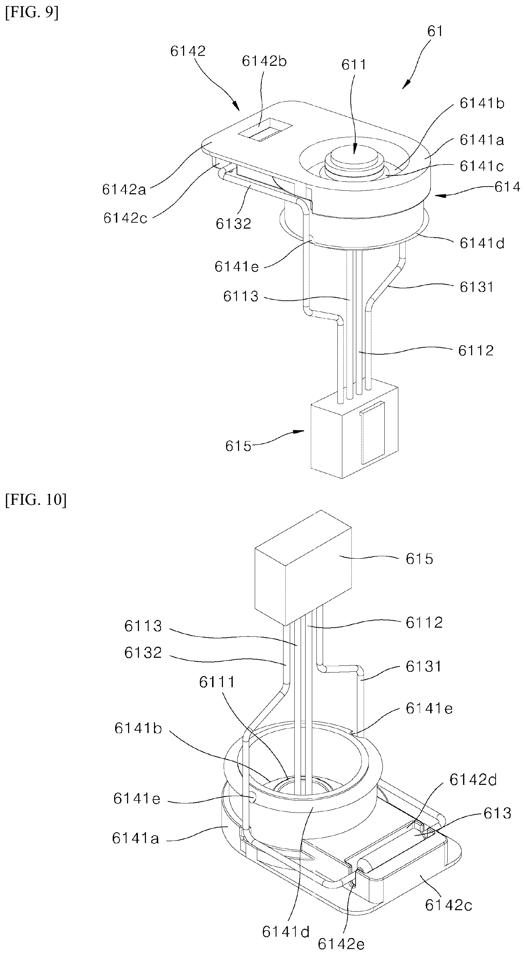

As shown in FIG. 8, a lower end of the second holder 6141 may partially pass through the coupling hole 3111a to be exposed to the lower surface of the disk portion 3111. The detailed configuration of the first temperature sensing portion 61 will be described later, referring to FIG. 9.

Meanwhile, a coil hole 3111b may be formed at an inner end of the guide rail 3113 to guide one end of the working coil 312 or the outgoing wire (322a, see FIG. 3) of the working coil 312 in the downward direction (D-direction). The inner end of the guide rail may be the point at which the guide rail 3113 ends inside.

As shown in FIG. 8, the plurality of ferrite cores 313 may be disposed on a lower surface of the disk portion 3111 provided in the core frame 311.

The core accommodating portions 3113b may be radially disposed on the lower surface of the core frame 311.

As shown in the drawings, the core accommodating portion 3113b may have a polygonal box shape with an entirely open lower surface. Each of the core accommodating portions 3113b may be defined by an accommodating wall protruded in the downward direction (D-direction) from the lower surface of the disk portion 3111 of the core frame 311.

The ferrite core 313 having the same shape as the inner shape of the core accommodating portion 3113b may be accommodated in reach core accommodating portion 3113b. Accordingly, the number of core accommodating portions 3113b may be the same as the number of ferrite cores 313.

The core accommodating portion 3113b may be formed so that the plurality of ferrite cores 313 disposed radially may be spaced a predetermined distance apart from each other in the circumferential direction of the core frame 311. An inner end of each core accommodating portion 3113b and an inner end of each ferrite core 313 may be formed to gradually decrease in width while proceeding in the inward direction to secure such a distance.

A D-direction end of the core accommodating portion 3113b may directly contact the first upper plate 411 of the first upper bracket 41 described above. The load of a heating target transmitted to the disk portion 3111 may be transmitted to the core accommodating portion 3113b along the guide rail 3113, thereby being finally transmitted to the first upper plate 411 of the first upper bracket 41. In other words, the core accommodating portion 3113b may have a dual function of accommodating the ferrite core 313 and supporting the external load inside the core frame 311.

Meanwhile, a cylindrical edge wall 3112 may be integrally formed with a radial-direction (r-direction) outer end of the disk portion 3111 of the core frame 311, and may be extended in the downward direction (D-direction).

The cylindrical-shaped edge wall 3112 may be configured to define the inner space of the core frame 311. Preferably, it maybe integrally formed with the disk portion 3111.

The height of the edge wall 3112 may be set based on the size of the ferrite core provided in the internal space of the core frame 311.

Meanwhile, a plurality of coupling tabs 3114 configured to couple the core frame 311 to the above-described first upper bracket 41 may be provided on an outer surface of the edge wall 3112. A coupling hole may be formed in each of the coupling tabs 3114 so that a securing means such as a bolt may be extended through the coupling hole.

A cable holder 3112a may be provided in the outer surface of the edge wall 3112 and configured to guide the lead wire of the first plate temperature sensor 611, the lead wire of the first thermal fuse and the outgoing wire (322a, see FIG. 3) of the working coil 312 to be extended outside the core frame 311.

### [Detailed Configuration of First temperature sensing portion]

Hereinafter, referring to FIG. 9, the detailed configuration of the first temperature sensing portion 61 provided in the electric range 1 according to an embodiment of the present disclosure will be described.

Hereinafter, referring to FIG. 9, the first temperature sensing portion 61 of the first heating portion 31 will be exemplarily described among the first to third heating portions 31, 32 and 33 constituting the heating portion 30. Unless otherwise described below, the configuration of the first temperature sensing portion 61 may be almost identically applicable to the second temperature sensing portion 62 and the third temperature sensing portion 63, and the description of overlapping contents is omitted.

As described above, the first temperature sensing portion 61 may include the first plate temperature sensor 611 configured to sense the temperature of the cover plate 20 directly above the first heating portion 31, a first coil temperature sensor 612 configured to sense the temperature of the first working coil 312, a first thermal fuse 613 configured to sense whether the temperature of the cover plate 20 increases to a preset threshold temperature or more, and a first sensor holder 61 configured to hold the first plate temperature sensor 611 and the first thermal fuse 613 therein.

In this instance, the first plate temperature sensor 611 and the first thermal fuse 613 may be separately formed or integrally formed with each other, to be disposed in the first heating portion 31.

When the first plate temperature sensor 611 and the first thermal fuse 613 are integrally formed with each other, the first thermal fuse 613 having a relatively smaller size may be integrated in such a way of being disposed inside the first plate temperature sensor 611.

In FIGS. 9 to 12, the first plate temperature sensor 611 and the first thermal fuse 613 may be separately formed as one example. Although the present disclosure is not limited thereto, the first plate temperature sensor 611 and the first thermal fuse 613 separately formed will be described shown in the drawings as one embodiment.

As shown in the drawings, the first plate temperature sensor 611 may be configured to sense the temperature of an area of the temperature plate that is directly above the first heating portion 31. Preferably, the first plate temperature sensor 611 may be a contact-type temperature sensor that may directly contact the bottom surface of the cover plate 20 to sense the temperature of the cover plate.

The first plate temperature sensor 611 coupled to an inner center area of the first holder 641 may be configured to sense the temperature of the bottom surface of the cover plate 20. Preferably, the first plate temperature sensor 641 may be configured to directly contact the bottom surface of the cover plate 20 and sense the temperature of the cover plate 20.

For that, a sensing surface formed on an upper end of the first plate temperature sensor 611 may be protruded more in the upward direction (U-direction) than the upper end of the first holder 641 to directly contact the bottom surface of the cover plate 20.

Each of the pair of the lead wires 6112 and 6113 provided in the first plate temperature sensor 611 may have one end connected to a lower end of the first plate temperature sensor 611 and the other end penetrating the cable holder 3112a of the edge wall 3112 to be electrically connected to the control circuit board module 80.

Meanwhile, a connector 615 may be connected between both ends of each lead wire to support the pair of lead wires of the first plate temperature sensor 611 and the pair of leas wires of the first thermal fuse 613, which will described in detail later.

The first coil temperature sensor 612 may be disposed on the bottom surface of the working coil 312 of the first heating portion 3' to sense the temperature of the working coil 312. The first coil temperature sensor 612 may be a contact-type temperature sensor configured to sense the temperature by contact with the bottom surface of the working coil 312, like the first plate temperature sensor 611.

As described above, the first coil temperature sensor 612 may be mounted on the sensor bracket formed in the through hole of the core frame.

The first coil temperature sensor 612 may have the same exterior design and the same standard to be compatible with the first plate temperature sensor 611.

The first thermal fuse 613 may serve to sense whether a portion of the cover plate 20 directly above the first heating portion 31 is overheated, preferably, a non-contact type sensor disposed on the bottom surface of the cover plate 20. As one example, the non-contact sensor may be a thermostat that is a well-known example in the art.

The first thermal fuse 613 may be held in the second holder 642 which will be described in detail later. The first thermal fuse 613 may correspond to a safety device which make the circuit open when the temperature of the cover plate 20 exceeds a predetermined threshold value and thus overheating occurs.

The first thermal fuse 613 may be classified into a recovery type that automatically returns to the original state when the temperature falls below another predetermined value after the circuit is made open due to occurrence of overheating, and a non-recovery type that does not return to the original state. The first thermal fuse 613 applied to this embodiment may be the recovery type.

Accordingly, when overheating of the cover plate 20 occurs, the internal circuit of the first thermal fuse 613 may be made open. When the temperature of the cover plate 20 falls below the other threshold temperature in the overheating state, the internal circuit may be automatically closed.

The first thermal fuse 613 provided as the recovery type is already well-known in the art and the detailed configuration thereof is omitted.

Similar to the first plate temperature sensor 611, the pair of lead wires 6131 and 6132 provided in the first thermal fuse 613 may be electrically connected to the control circuit board module 80 after penetrating the cable holder 3112a formed in the edge wall 3112 of the core frame 311.

As mentioned above, the pair of lead wire of lead wires provided in the first thermal fuse 613 may be connected to the connector 615 together with the pair of lead wires provided in the first plate temperature sensor 611.

The first sensor holder 614 may include a first holder 6141 formed in a substantially hollow cylindrical shape and a second holder integrally formed with an upper end of the first holder in a box shape extended outward from the upper end of the first holder.

The first sensor holder 614 may include a cylindrical portion 6141a defining an exterior thereof and the first plate temperature sensor 611 may be secured in the cylindrical portion 6141a.

A circular plate-shaped extension plate 6141b may be formed in the cylindrical portion 6141a, and may be extended from an inner circumferential surface of the cylindrical portion 6141a toward the inside of the cylindrical portion 6141a. A fitting hole 6141b may be formed in the center of the extension plate 6141b so that the first plate temperature sensor 611 may be fitted into the fitting hole 6141c.

The first plate temperature sensor 611 may be fitted into the fitting hole 6141c from the upward direction (U-direction) toward the downward direction (D-direction), thereby being coupled to the first sensor holder 614.

When the cylindrical portion 6141a is divided in the vertical direction (U-D direction), a lower area may pass through the coupling hole of the core frame described above and extend in the downward direction (D-direction). An upper area of the cylindrical portion may be coupled to the coupling hole in such a way of not passing through the coupling hole. For that, the upper area of the cylindrical portion 6141a may have an outer diameter that is greater than an inner diameter of the coupling hole and the lower area thereof may have an outer diameter that is smaller than the inner diameter of the coupling hole.

Meanwhile, a protrusion 6141d may be formed at the lowest part of the cylindrical portion 6141a to prevent separation of the cylindrical portion inserted in the coupling hole. As shown in the drawings, a guide groove 6141e may be formed in the protrusion 6141d so that the pair of the lead wires of the first thermal fuse 613 may pass through the guide groove 6141e. The guide groove 6141e may be formed by cutting away some area of the protrusion 6141d.

The second holder 6142 may include a plate-shaped upper plate portion 6142a extended radially (r-direction) outward from the cylindrical portion 6141a of the first holder 6141, and a fuse securing promotion 6142c integrally formed with a lower surface of the upper plate portion 6142a.

As shown in the drawings, an exposure hole 6142a through which the first thermal fuse 613 is exposed may be formed in the upper plate portion 6142a extended from the upper end of the cylindrical portion 6141a. The size of the exposure hole 6142b may be determined enough to expose the sensing surface of the first thermal fuse 613 at least partially.

The fuse securing portion 6142c integrally formed with the upper plate portion 6142a may be provided in a lower surface of the upper plate portion 6142a. Like the upper plate portion 6142a, the fuse securing portion 6142c may be formed in a box shape extended radially outward from the cylindrical portion 6141a of the first holder 6141.

A fuse insertion groove 6142d may be formed in the fuse securing portion 6142c so that the first thermal fuse 613 may be insertedly secured to the fuse insertion groove 6142d.

As one example, the fuse insertion groove 6142d may be formed by recessing some area of the fuse securing portion 6142c in the upward direction (U-direction), and may have a size that is big enough to accommodate the entire area of the first thermal fuse 613.

Notched grooves 6142e through which the lead wires of the first thermal fuse 613 can pass may be formed in both lateral surfaces of the fuse insertion groove 6142d, respectively.

Meanwhile, the first plate temperature sensor 611 and the first thermal fuse 613 that constitute the first temperature sensing portion 61 of the electric range 1 as mentioned above may be connected to each other in series.

Although not shown, when they are integrally manufactured, the first plate temperature sensor 611 and the first thermal fuse 613 may be connected in series to achieve a series connection structure.

However, when they are separately manufactured, a separate means for connecting the first plate temperature sensor 611 and the first thermal fuse 613 in series may be additionally required.

As one example, the separate means for the serial connection may be provided in the connector 615 described above. More specifically, the separate means may be a relay terminal provided in the connector 615.

FIGS. 11 and 12 are schematic views showing that the first plate temperature sensor 611 and the first thermal fuse 613 are connected in series through a relay terminal inside the connector 615.

As shown in FIG. 11, an input relay terminal 6151, an intermediate relay terminal 6152, and an output relay terminal 6153 may be provided in the connector 615.

In this instance, the input relay terminal 6151 of the connector 615 may be electrically connected to the first lead wire 6131 of the first thermal fuse 613.

The second lead wire 6132 of the first thermal fuse 613 may be electrically connected to one end of the intermediate terminal 6152, and the other end thereof may be electrically connected to the first lead wire of the first plate temperature sensor 611.

The second lead wire of the first plate temperature sensor 611 may be electrically connected to the output relay terminal 6153.

At this time, the input relay terminal 6151 and the output relay terminal 6153 of the connector 615 may be connected to the controller 100 which will be described later through an input lead wire and an output lead wire that are not shown. In addition, a first temperature sensing circuit (TC1, see FIG. 13) connected to the first plate temperature sensor 611 and the first thermal fuse 613 in series may be formed.

Due to the structure, the first thermal fuse 613 may be connected in series to the first lead wire 6112 corresponding to an input end of the first plate temperature sensor 611, and the first temperature sensor 611 may be connected in series, thereby forming the first temperature sensing circuit (TC1, see FIG. 13) in which the first plate temperature sensor 611 and the first thermal fuse 613 are connected in series.

Alternatively, as shown in FIG. 12, the first thermal fuse 613 may be serially connected to the second lead wire 6113 corresponding to an output end of the first plate temperature sensor 611.

In this instance, the input relay terminal 6151 of the connector 615 may be electrically connected to the first lead wire 6112 of the first plate temperature sensor 611.

The first lead wire 6112 of the first plate temperature sensor 611 may be electrically connected to one end of the intermediate relay terminal 6152, and the other end thereof may be electrically connected to the second lead wire of the first thermal fuse 613.

Finally, the first lead wire 6131 of the first thermal fuse 613 may be electrically connected to the output relay terminal 6153. The first temperature sensing circuit (TC1, see FIG. 13) in which the above-mentioned elements are connected in serial may be formed.

At this time, the input relay terminal 6151 and the output relay terminal 6153 of the connector 615 may be connected to the controller 100, which will be described in detail later, through the input lead wire and the output lead wire which are not shown in the drawings. Accordingly, the first temperature sensing circuit (TC1, see FIG. 13) in which the first plate temperature sensor 611 and the first thermal fuse 613 are connected in series may be formed.

In FIGS. 11 and 12, the separate means for serial connection of the first plate temperature sensor 611 and the first thermal fuse 613 are described as the relay terminals provided inside the connector 615. However, they are only exemplary. Modifications in which the series connection structure can be achieved through means other than the connector 615 may be also applicable, of course, and it will be understood that they are included within the scope of the present disclosure.

Meanwhile, although not shown in the drawings, a temperature sensing circuit TC2 including a second plate temperature sensor 621 and the second thermal fuse 623, and a third temperature sensing circuit TC3 including a third plate temperature sensor 631 and a third thermal fuse 633 may have the same configuration as the first temperature sensing circuit TC3.

### [Configuration of Controller and Method for controlling Electric range]

Hereinafter, the configuration of a controller according to an embodiment of the electric range 1 will be described referring to FIG. 13.

As shown in FIG. 13, the electric range 1 according to an embodiment may include a controller 100 configured to control each functional configuration.

The controller 100 may be mounted on the above-described control circuit board module 80, particularly, the main circuit board module 81 together with the power conversion module (e.g., the switching element 812). As well known in the art, the controller may be provided in various types such as a microcontroller, a microcontroller or a microprocessor.

As shown in the drawings, the controller 100 may be electrically connected to the power circuit board module 83. Power input from the external power source may be converted through the power circuit board module 83 and supplied to the controller 100 and the switching element 812.

The power supplied to the switching element 812 may be converted into high-frequency power and transmitted to the working coil 312 of the first heating portion 31, the working coil 322 of the second heating portion 32 and the working coil 322 of the third heating portion 33 based on a control signal of the controller 100.

Also, the controller 100 may be individually connected to the first temperature sensing circuit TC1, the second temperature sensing circuit TC2 and the third temperature sensing circuit.

The temperatures and overheating of the first to third heating portions 31 to 33 may be independently monitored by the first temperature sensing circuit TC1, the second temperature sensing circuit TC2 and the third temperature sensing circuit that are individually connected.

In particular, as described above, the first temperature sensing circuit TC1, the second temperature sensing circuit TC2 and the third temperature sensing circuit TC3 of the electric range 1 according to the embodiment may be provided in a state where the plate temperature sensor and the thermal fuse are connected in series. Accordingly, if the temperature sensing circuit is opened by the disconnection occurring inside the thermal fuses 613, 623 and 633 due to overheating of any one of the first to third heating portions 31 to 33, the controller 100 may detect the circuit opening and immediately detect that the corresponding heating portion is in an overheated state.

Hence, when it determines that the heating portion is in the overheated state, the controller 100 may be implemented to stop the operation of the switching element 812 so as to stop supplying power to the corresponding heating portion.

However, as described above, the first to third thermal fuses 613, 623 and 633 provided in each temperature sensing circuit may be return type fuses. When the temperature falls below a predetermined temperature after the circuit is opened, the thermal fuses may automatically return to the original state and the opened temperature sensing circuit may be restored to the closed state.

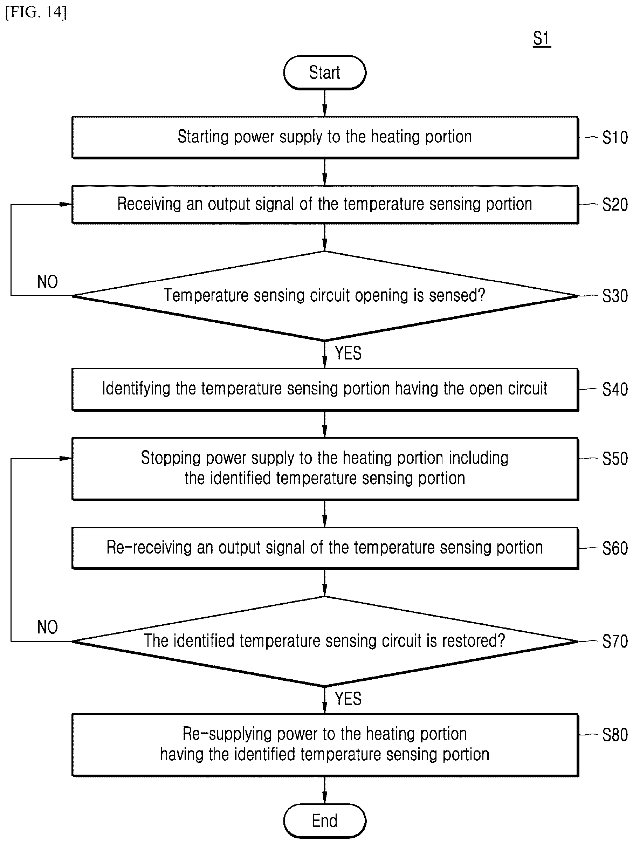

Hereinafter, referring to FIG. 14, a control method for controlling the electric range 1 according to the present disclosure will be described.

As described above, the object of the present disclosure is to remarkably improve user convenience by automatically stopping the operation of the heating portion 30 when overheating occurs, and automatically re-operating it when the overheated state is resolved.

The object may be achieved by the control method S1 below effectively.

Referring to FIG. 14, the controller 100 may transmit a control signal to the switching element 812 to start heating of a heating target, and start power supply to the first to third heating portions 31 to 33 (S10).

At this time, power may be supplied to some of the first to third heating portions 31 to 33 to use some of the first to third heating portions 31 to 33 based on the user's selection.

Hereinafter, for convenience, the case in which power is simultaneously supplied to the first and second heating portions 31 and 32 will be focused on so that the method for controlling the electric range 1 according to the present disclosure can be implemented in more diverse ways.

In S10, when power supply to the working coil 312 of the first heating portion 31 and the working coil 322 of the second heating portion 32 starts, the controller may receive an output signal of the first temperature sensing portion 61 and an output signal of the second temperature sensing portion 62 (S20).

At this time, the output signal of the first temperature sensing portion 61 may be independently received through the first temperature sensing circuit TC1 and the output signal of the second temperature sensing portion 62 through the second temperature sensing circuit TC2. The output signal of the first temperature sensing portion 61 may relate to the temperature of the first heating portion 31 and the output signal of the second temperature sensing portion 62 may relate to the temperature of the second temperature sensing portion 62. That is because the first thermal fuse 613 is serially connected to the first plate temperature sensor 611 and the second thermal fuse 623 is serially connected to the second plate temperature sensor 621.

Meanwhile, when the output signal of the first temperature sensing portion 61 and the output signal of the second temperature sensing portion 62 are received in S20, the controller 100 may determine whether the first temperature sensing circuit TC1 and the second temperature sensing circuit TC2 are opened based on the output signals (S30).

When the received output signals of the first temperature sensing portion 61 and the second temperature sensing portion 62 are out of a range of normal signal values output when they are normally connected, it may be determined that the output signals are not received.

Such the abnormal signal may be generated when the inner circuit is opened in the first thermal fuse 613 or the second thermal fuse 623 due to overheating occurring in the first heating portion 31 or the second heating portion 32. Accordingly, the controller 100 may determine that the first heating portion 31 or the second heating portion 32 is in the overheated state once receiving the abnormal signal.

When having determined that the first temperature sensing circuit TC1 or the second temperature sensing circuit TC2 is opened in S30, the controller 100 may identify that the temperature sensing circuit outputting the abnormal signal is opened (S40).

As one example, description will be made based on the case in which only the first temperature sensing circuit TC1 is detected in an open state.

When identifying that the first temperature sensing circuit TC1 is opened, the controller 100 may transmit a control signal configured to stop the operation of the switching element 812 to the switching element 812. Hence, the switching element 812 may be stopped to stop power supply to the working coil 312 of the first heating portion 31 and the working coil 322 of the second heating portion 32 (S50).

The reason that the power supply to the second heating portion 32 in which overheating does not occur is also stopped is because the operation of the entire switching elements 812 is stopped as described above.

Meanwhile, when the power supply to the first heating portion 31 and the second heating portion 32 is stopped in S50, the controller 100 may re-receive the output signal of the first temperature sensing circuit TC1 and the output signal of the second temperature sensing circuit TC2 (S70).

When re-receiving the output signal of the first temperature sensing circuit TC1 and the output signal of the second temperature sensing circuit TC2 in S70, the controller 100 may determine whether the opened first temperature sensing circuit TC1 has returned to the original state (S80).

As mentioned above, the first thermal fuse 613 is the return type fuse. When the temperature of the first heating portion 31 falls below a predetermined temperature after the internal circuit of the first thermal fuse 613 is opened, the first thermal fuse 613 may be automatically restored to its original state. The controller 100 may check whether the first thermal fuse 613 has returned to the original state as described to identify whether the first temperature sensing circuit TC1 returns to the original state.

Once determining that the first temperature sensing circuit TC1 is not restored to the original state in S80, the controller 100 may return to S50 and repeat the subsequent operations.

However, when determining that the first temperature sensing circuit TC1 is restored to the original state in S80, the controller 100 may transmit a control signal to the switching element 812 to control power to be re-supplied to the working coil 312 of the first heating portion 31 and the working coil 322 of the second heating portion 32 (S90).

Since the current overheated state of the first heating portion 31 has been resolved, power supply to the first heating portion 31 and the second heating portion 32 may re-start to resume the cooking process that was interrupted due to the overheating.

The embodiments are described above with reference to a number of illustrative embodiments thereof. The scope of protection of the current invention is defined by the appended claims.

## Claims

1. An electric range comprising:
a cover plate (20) on which a heating target can be disposed;
a heating portion (31, 32, 33) comprising a working coil to which high-frequency electric power is applied and configured to heat the heating target by using a magnetic field generated from the working coil;
a plate temperature sensor (611, 621, 631) disposed in the heating portion (31, 32, 33) and configured to sense the temperature of the cover plate (20);
a thermal fuse (613, 623, 633) disposed in the heating portion (31, 32, 33) and configured to sense overheating of the cover plate (20); and
a controller (100) configured to supply electric power to the working coil, to which the plate temperature sensor (611, 621, 631) and the thermal fuse (613, 623, 633) are electrically connected,
wherein the controller (100) is configured to stop power supply to the working coil when overheating of the cover plate (200) occurs,
**characterized in that** the plate temperature sensor (611, 621, 631) and the thermal fuse (613, 623, 633) are connected to each other in series, and connected to the controller (100) to form a temperature sensing circuit (TC1, TC2, TC3), and
wherein the thermal fuse (613, 623, 633) is configured to open the temperature sensing circuit (TC1, TC2, TC3) when sensing the overheating, and automatically restore the temperature sensing circuit (TC1, TC2, TC3) to its original closed state when the overheating is resolved.

2. The electric range of claim 1, wherein the plate temperature sensor (611, 621, 631) and the thermal fuse (613, 623, 633) are integrally formed with each other and disposed in the heating portion (31, 32, 33).

3. The electric range of claim 1 or 2, wherein the heating portion (31, 32, 33) comprises a first heating portion (31) and a second heating portion (32) that are spaced a preset distance apart from each other,
the plate temperature sensor (611, 621, 631) comprises a first plate temperature sensor (611) disposed in the first heating portion (31) and a second plate temperature sensor (621) disposed in the second heating portion (32), and
the thermal fuse (613, 623, 633) comprises a first thermal fuse (613) disposed in the first heating portion (31) and a second thermal fuse (623) disposed in the second heating portion (32).

4. The electric range of claim 3, wherein the temperature sensing circuit comprises (TC1, TC2, TC3),
a first temperature sensing circuit (TC1) formed by being connected to the first plate temperature sensor (611) and the first thermal fuse (613) in series and connected to the controller (100); and
a second temperature sensing circuit (TC2) formed by being connected to the second plate temperature sensor (621) and the second thermal fuse (623) in series and connected to the controller (100).

5. The electric range of claim 4, wherein the first thermal fuse (613) is configured to open the first temperature sensing circuit (TC1) when sensing the overheating, and restore the first temperature sensing circuit (TC1) to its original closed state when the overheating is resolved, and
the second thermal fuse (623) is configured to open the second temperature sensing circuit (TC2), and restore the second temperature sensing circuit (TC2) to its original closed state when the overheating is resolved.

6. The electric range of claim 4 or 5, wherein the controller (100) is configured to separately receive an output signal from the first temperature sensing circuit (TC1) and an output signal from the second temperature sensing circuit (TC2) when power supply to the first heating portion (31) and the second heating portion (32) starts, and
the controller is configured to determine whether the first temperature and the second temperature sensing circuit (TC1, TC2) are opened based on the received output signals.

7. The electric range of claim 6, wherein the controller (100) is configured to stop power supply to the working coil of the first heating portion (31) and the working coil of the second heating portion (32) once the controller (100) determines that the first temperature sensing circuit (TC1) is opened among the first and second temperature sensing circuit (TC2).

8. The electric range of claim 7, wherein the controller (100) is configured to receive again an output signal from the first temperature sensing circuit (TC1) and an output signal from the second temperature sensing circuit (TC2) after stopping the power supply to the first heating portion (31), and to determine whether the first temperature sensing circuit (TC1) is restored to the original closed state based on the received output signals.

9. The electric range of claim 8, wherein the controller (100) is configured to restart power supply to the working coil of the first heating portion (31) and the working coil of the second heating portion (32) once the controller (100) identifies that the first temperature sensing circuit (TC1) is restored to the closed state.

10. A method for controlling an electric range comprising a cover plate (20) on which a heating target can be disposed; a heating portion (31, 32, 33) comprising a working coil to which high-frequency power is applied and configured to heat the heating target by using a magnetic field generated from the working coil; a plate temperature sensor (611, 621, 631) disposed in the heating portion (31, 32, 33) and configured to sense the temperature of the cover plate; a thermal fuse (613, 623, 633) disposed in the heating portion (31, 32, 33) and configured to sense overheating of the cover plate (20); and a controller (100) configured to supply electric power to the working coil, to which the plate temperature sensor (611, 621, 631) and the thermal fuse (613, 623, 633) are electrically connected,
the method comprises, by the controller (100), stopping power supply to the working coil when overheating of the cover plate (200) occurs,
**characterized in that** the plate temperature sensor (611, 621, 631) and the thermal fuse (613, 623, 633) are connected to each other in series, and connected to the controller (100) to form a temperature sensing circuit (TC1, TC2, TC3), and
further charactered by the method comprising:
by the thermal fuse (613, 623, 633), when sensing the overheating, opening the temperature sensing circuit (TC1, TC2, TC3), and when the overheating is resolved, automatically restoring the temperature sensing circuit (TC1, TC2, TC3) to its original closed state.

11. The method of claim 10, wherein the heating portion (31, 32, 33) of the electric range comprises a first heating portion (31) and a second heating portion (32) that are spaced a preset distance apart from each other, the plate temperature sensor (611, 621, 631) comprises a first plate temperature sensor (611) disposed in the first heating portion (31) and a second plate temperature sensor (621) disposed in the second heating portion (32), and the thermal fuse (613, 623, 633) comprises a first thermal fuse (613) disposed in the first heating portion (31) and a second thermal fuse (623) disposed in the second heating portion (32),
wherein the temperature sensing circuit comprises (TC1, TC2, TC3) a first temperature sensing circuit (TC1) formed by being connected to the first plate temperature sensor (611) and the first thermal fuse (613) in series and connected to the controller (100), and a second temperature sensing circuit (TC2) formed by being connected to the second plate temperature sensor (621) and the second thermal fuse (623) in series and connected to the controller (100),
the method further comprises:
by the first thermal fuse (613), when sensing the overheating, opening the first temperature sensing circuit (TC1), and when the overheating is resolved, restoring the first temperature sensing circuit (TC1) to its original closed state.

12. The method of claim 11, comprising:
by the controller (100), separately receiving an output signal from the first temperature sensing circuit (TC1) and an output signal from the second temperature sensing circuit (TC2) when power supply to the first heating portion (31) and the second heating portion (32) starts, and determining whether the first temperature sensing circuit (TC1) and the second temperature sensing circuit (TC2) are opened based on the output signals received.

13. The method of claim 12, further comprising:
by the controller (100), stopping power supply to the working coil of the first heating portion (31) and the working coil of the second heating portion (32), once it is determined that the first temperature sensing circuit (TC1) is opened among the first and second temperature sensing circuit (TC1, TC2).

14. The method of claim 13, further comprising:
by the controller (100), separately receiving again an output signal from the first temperature sensing circuit (TC1) and an output signal from the second temperature sensing circuit (TC2), after the power supply to the first heating portion (31) is stopped, and determining whether the first temperature sensing circuit (TC1) is restored to its original closed state based on the output signals received.

15. The method of claim 14, further comprising:
re-starting power supply to the working coil of the first heating portion (31) and the working coil of the second heating portion (32), when it is identified that the first temperature sensing circuit (TC1) is restored to the original closed state.

## Patentansprüche

1. Elektrokochgerät, umfassend:
eine Abdeckplatte (20), auf der ein Heizobjekt angeordnet werden kann;
einen Heizabschnitt (31, 32, 33), der eine Arbeitsspule umfasst, an die hochfrequente elektrische Leistung angelegt wird, und der dazu ausgebildet ist, das Heizobjekt unter Verwendung eines von der Arbeitsspule erzeugten Magnetfelds zu erhitzen;
einen Plattentemperatursensor (611, 621, 631), der in dem Heizabschnitt (31, 32, 33) angeordnet ist und dazu ausgebildet ist, die Temperatur der Abdeckplatte (20) zu erfassen;
eine Thermosicherung (613, 623, 633), die in dem Heizabschnitt (31, 32, 33) angeordnet ist und dazu ausgebildet ist, eine Überhitzung der Abdeckplatte (20) zu erfassen; und
eine Steuerung (100), die dazu ausgebildet ist, elektrische Leistung an die Arbeitsspule zu liefern, wobei der Plattentemperatursensor (611, 621, 631) und die Thermosicherung (613, 623, 633) elektrisch mit der Steuerung verbunden sind,
wobei die Steuerung (100) dazu ausgebildet ist, die Leistungszufuhr an die Arbeitsspule zu stoppen, wenn eine Überhitzung der Abdeckplatte (200) auftritt,
**dadurch gekennzeichnet, dass** der Plattentemperatursensor (611, 621, 631) und die Thermosicherung (613, 623, 633) in Reihe miteinander verbunden sind und mit der Steuerung (100) verbunden sind, um eine Temperaturmessschaltung (TC1, TC2, TC3) zu bilden, und
wobei die Thermosicherung (613, 623, 633) dazu ausgebildet ist, die Temperaturmessschaltung (TC1, TC2, TC3) beim Erfassen der Überhitzung zu öffnen und die Temperaturmessschaltung (TC1, TC2, TC3) automatisch in ihren ursprünglichen geschlossenen Zustand zurückzuversetzen, wenn die Überhitzung behoben ist.

2. Elektrokochgerät nach Anspruch 1, wobei der Plattentemperatursensor (611, 621, 631) und die Thermosicherung (613, 623, 633) integral miteinander ausgebildet und in dem Heizabschnitt (31, 32, 33) angeordnet sind.

3. Elektrokochgerät nach Anspruch 1 oder 2, wobei der Heizabschnitt (31, 32, 33) einen ersten Heizabschnitt (31) und einen zweiten Heizabschnitt (32) umfasst, die in einem vorgegebenen Abstand voneinander beabstandet sind,
der Plattentemperatursensor (611, 621, 631) einen ersten Plattentemperatursensor (611) umfasst, der in dem ersten Heizabschnitt (31) angeordnet ist, und einen zweiten Plattentemperatursensor (621), der in dem zweiten Heizabschnitt (32) angeordnet ist, und
die Thermosicherung (613, 623, 633) eine erste Thermosicherung (613) umfasst, die in dem ersten Heizabschnitt (31) angeordnet ist, und eine zweite Thermosicherung (623), die in dem zweiten Heizabschnitt (32) angeordnet ist.

4. Elektrokochgerät nach Anspruch 3, wobei die Temperaturmessschaltung (TC1, TC2, TC3) umfasst:
eine erste Temperaturmessschaltung (TC1), die dadurch gebildet ist, dass sie mit dem ersten Plattentemperatursensor (611) und der ersten Thermosicherung (613) in Reihe verbunden und mit der Steuerung (100) verbunden ist; und
eine zweite Temperaturmessschaltung (TC2), die dadurch gebildet ist, dass sie mit dem zweiten Plattentemperatursensor (621) und der zweiten Thermosicherung (623) in Reihe verbunden und mit der Steuerung (100) verbunden ist.

5. Elektrokochgerät nach Anspruch 4, wobei die erste Thermosicherung (613) dazu ausgebildet ist, die erste Temperaturmessschaltung (TC1) beim Erfassen der Überhitzung zu öffnen und die erste Temperaturmessschaltung (TC1) in ihren ursprünglichen geschlossenen Zustand zurückzuversetzen, wenn die Überhitzung behoben ist, und
die zweite Thermosicherung (623) dazu ausgebildet ist, die zweite Temperaturmessschaltung (TC2) zu öffnen und die zweite Temperaturmessschaltung (TC2) in ihren ursprünglichen geschlossenen Zustand zurückzuversetzen, wenn die Überhitzung behoben ist.

6. Elektrokochgerät nach Anspruch 4 oder 5, wobei die Steuerung (100) dazu ausgebildet ist, jeweils getrennt ein Ausgangssignal von der ersten Temperaturmessschaltung (TC1) und ein Ausgangssignal von der zweiten Temperaturmessschaltung (TC2) zu empfangen, wenn die Leistungszufuhr an den ersten Heizabschnitt (31) und den zweiten Heizabschnitt (32) beginnt, und
die Steuerung dazu ausgebildet ist, auf Grundlage der empfangenen Ausgangssignale zu bestimmen, ob die erste Temperaturmessschaltung und die zweite Temperaturmessschaltung (TC1, TC2) geöffnet sind.

7. Elektrokochgerät nach Anspruch 6, wobei die Steuerung (100) dazu ausgebildet ist, die Leistungszufuhr an die Arbeitsspule des ersten Heizabschnitts (31) und die Arbeitsspule des zweiten Heizabschnitts (32) zu stoppen, sobald die Steuerung (100) bestimmt, dass die erste Temperaturmessschaltung (TC1) unter der ersten und zweiten Temperaturmessschaltung (TC2) geöffnet ist.

8. Elektrokochgerät nach Anspruch 7, wobei die Steuerung (100) dazu ausgebildet ist, nach dem Stoppen der Leistungszufuhr an den ersten Heizabschnitt (31) erneut ein Ausgangssignal von der ersten Temperaturmessschaltung (TC1) und ein Ausgangssignal von der zweiten Temperaturmessschaltung (TC2) zu empfangen, und zu bestimmen, ob die erste Temperaturmessschaltung (TC1) in den ursprünglichen geschlossenen Zustand zurückversetzt ist, auf Grundlage der empfangenen Ausgangssignale.

9. Elektrokochgerät nach Anspruch 8, wobei die Steuerung (100) dazu ausgebildet ist, die Leistungszufuhr an die Arbeitsspule des ersten Heizabschnitts (31) und die Arbeitsspule des zweiten Heizabschnitts (32) erneut zu starten, sobald die Steuerung (100) feststellt, dass die erste Temperaturmessschaltung (TC1) in den geschlossenen Zustand zurückversetzt ist.

10. Verfahren zum Steuern eines Elektrokochgeräts, das eine Abdeckplatte (20) umfasst, auf der ein Heizobjekt angeordnet werden kann; einen Heizabschnitt (31, 32, 33), der eine Arbeitsspule umfasst, an die hochfrequente Leistung angelegt wird, und der dazu ausgebildet ist, das Heizobjekt unter Verwendung eines von der Arbeitsspule erzeugten Magnetfelds zu erhitzen; einen Plattentemperatursensor (611, 621, 631), der in dem Heizabschnitt (31, 32, 33) angeordnet ist und dazu ausgebildet ist, die Temperatur der Abdeckplatte zu erfassen; eine Thermosicherung (613, 623, 633), die in dem Heizabschnitt (31, 32, 33) angeordnet ist und dazu ausgebildet ist, eine Überhitzung der Abdeckplatte (20) zu erfassen; und eine Steuerung (100), die dazu ausgebildet ist, elektrische Leistung an die Arbeitsspule zu liefern, wobei der Plattentemperatursensor (611, 621, 631) und die Thermosicherung (613, 623, 633) elektrisch mit der Steuerung verbunden sind,
wobei das Verfahren durch die Steuerung (100) das Stoppen der Leistungszufuhr an die Arbeitsspule umfasst, wenn eine Überhitzung der Abdeckplatte (200) auftritt,
**dadurch gekennzeichnet, dass** der Plattentemperatursensor (611, 621, 631) und die Thermosicherung (613, 623, 633) in Reihe miteinander verbunden sind und mit der Steuerung (100) verbunden sind, um eine Temperaturmessschaltung (TC1, TC2, TC3) zu bilden, und
weiter **dadurch gekennzeichnet, dass** das Verfahren umfasst:
durch die Thermosicherung (613, 623, 633), beim Erfassen der Überhitzung, das Öffnen der Temperaturmessschaltung (TC1, TC2, TC3), und wenn die Überhitzung behoben ist, das automatische Zurückversetzen der Temperaturmessschaltung (TC1, TC2, TC3) in ihren ursprünglichen geschlossenen Zustand.

11. Verfahren nach Anspruch 10, wobei der Heizabschnitt (31, 32, 33) des Elektrokochgeräts einen ersten Heizabschnitt (31) und einen zweiten Heizabschnitt (32) umfasst, die in einem vorgegebenen Abstand voneinander beabstandet sind, der Plattentemperatursensor (611, 621, 631) einen ersten Plattentemperatursensor (611) umfasst, der in dem ersten Heizabschnitt (31) angeordnet ist, und einen zweiten Plattentemperatursensor (621), der in dem zweiten Heizabschnitt (32) angeordnet ist, und die Thermosicherung (613, 623, 633) eine erste Thermosicherung (613) umfasst, die in dem ersten Heizabschnitt (31) angeordnet ist, und eine zweite Thermosicherung (623), die in dem zweiten Heizabschnitt (32) angeordnet ist,
wobei die Temperaturmessschaltung umfasst (TC1, TC2, TC3) eine erste Temperaturmessschaltung (TC1), die dadurch gebildet ist, dass sie mit dem ersten Plattentemperatursensor (611) und der ersten Thermosicherung (613) in Reihe verbunden und mit der Steuerung (100) verbunden ist, und eine zweite Temperaturmessschaltung (TC2), die dadurch gebildet ist, dass sie mit dem zweiten Plattentemperatursensor (621) und der zweiten Thermosicherung (623) in Reihe verbunden und mit der Steuerung (100) verbunden ist,
wobei das Verfahren ferner umfasst:
durch die erste Thermosicherung (613), beim Erfassen der Überhitzung, das Öffnen der ersten Temperaturmessschaltung (TC1), und wenn die Überhitzung behoben ist, das Zurückversetzen der ersten Temperaturmessschaltung (TC1) in ihren ursprünglichen geschlossenen Zustand.

12. Verfahren nach Anspruch 11, umfassend:
durch die Steuerung (100), jeweils getrennt das Empfangen eines Ausgangssignals von der ersten Temperaturmessschaltung (TC1) und eines Ausgangssignals von der zweiten Temperaturmessschaltung (TC2), wenn die Leistungszufuhr an den ersten Heizabschnitt (31) und den zweiten Heizabschnitt (32) beginnt, und das Bestimmen, ob die erste Temperaturmessschaltung (TC1) und die zweite Temperaturmessschaltung (TC2) geöffnet sind, auf Grundlage der empfangenen Ausgangssignale.

13. Verfahren nach Anspruch 12, ferner umfassend:
durch die Steuerung (100), das Stoppen der Leistungszufuhr an die Arbeitsspule des ersten Heizabschnitts (31) und die Arbeitsspule des zweiten Heizabschnitts (32), sobald bestimmt wird, dass die erste Temperaturmessschaltung (TC1) unter der ersten und zweiten Temperaturmessschaltung (TC1, TC2) geöffnet ist.

14. Verfahren nach Anspruch 13, ferner umfassend:
durch die Steuerung (100), jeweils getrennt das erneute Empfangen eines Ausgangssignals von der ersten Temperaturmessschaltung (TC1) und eines Ausgangssignals von der zweiten Temperaturmessschaltung (TC2), nachdem die Leistungszufuhr an den ersten Heizabschnitt (31) gestoppt ist, und das Bestimmen, ob die erste Temperaturmessschaltung (TC1) in ihren ursprünglichen geschlossenen Zustand zurückversetzt ist, auf Grundlage der empfangenen Ausgangssignale.

15. Verfahren nach Anspruch 14, ferner umfassend:
das erneute Starten der Leistungszufuhr an die Arbeitsspule des ersten Heizabschnitts (31) und die Arbeitsspule des zweiten Heizabschnitts (32), wenn festgestellt wird, dass die erste Temperaturmessschaltung (TC1) in den ursprünglichen geschlossenen Zustand zurückversetzt ist.

## Revendications

1. Appareil de cuisson électrique, comprenant :
une plaque de recouvrement (20) sur laquelle un objet à chauffer peut être disposé ;
une section de chauffage (31, 32, 33) comprenant une bobine de travail à laquelle une puissance électrique à haute fréquence est appliquée, et configurée pour chauffer l'objet à chauffer en utilisant un champ magnétique généré par la bobine de travail ;
un capteur de température de plaque (611, 621, 631) disposé dans la section de chauffage (31, 32, 33) et configuré pour détecter la température de la plaque de recouvrement (20) ;
un fusible thermique (613, 623, 633) disposé dans la section de chauffage (31, 32, 33) et configuré pour détecter une surchauffe de la plaque de recouvrement (20) ; et
une unité de commande (100) configurée pour fournir une puissance électrique à la bobine de travail, le capteur de température de plaque (611, 621, 631) et le fusible thermique (613, 623, 633) étant électriquement connectés à l'unité de commande,
dans lequel l'unité de commande (100) est configurée pour arrêter l'alimentation en puissance de la bobine de travail lorsqu'une surchauffe de la plaque de recouvrement (200) se produit,
**caractérisé en ce que** le capteur de température de plaque (611, 621, 631) et le fusible thermique (613, 623, 633) sont connectés en série l'un avec l'autre et connectés à l'unité de commande (100) pour former un circuit de mesure de température (TC1, TC2, TC3), et
dans lequel le fusible thermique (613, 623, 633) est configuré pour ouvrir le circuit de mesure de température (TC1, TC2, TC3) lors de la détection de la surchauffe et pour rétablir automatiquement le circuit de mesure de température (TC1, TC2, TC3) dans son état fermé initial lorsque la surchauffe est supprimée.

2. Appareil de cuisson électrique selon la revendication 1, dans lequel le capteur de température de plaque (611, 621, 631) et le fusible thermique (613, 623, 633) sont formés intégralement l'un avec l'autre et disposés dans la section de chauffage (31, 32, 33).

3. Appareil de cuisson électrique selon la revendication 1 ou 2, dans lequel la section de chauffage (31, 32, 33) comprend une première section de chauffage (31) et une deuxième section de chauffage (32) espacées l'une de l'autre d'une distance prédéterminée,
le capteur de température de plaque (611, 621, 631) comprend un premier capteur de température de plaque (611) disposé dans la première section de chauffage (31) et un deuxième capteur de température de plaque (621) disposé dans la deuxième section de chauffage (32), et
le fusible thermique (613, 623, 633) comprend un premier fusible thermique (613) disposé dans la première section de chauffage (31) et un deuxième fusible thermique (623) disposé dans la deuxième section de chauffage (32).

4. Appareil de cuisson électrique selon la revendication 3, dans lequel le circuit de mesure de température (TC1, TC2, TC3) comprend :
un premier circuit de mesure de température (TC1) formé par une connexion en série avec le premier capteur de température de plaque (611) et le premier fusible thermique (613) et connecté à l'unité de commande (100) ; et
un deuxième circuit de mesure de température (TC2) formé par une connexion en série avec le deuxième capteur de température de plaque (621) et le deuxième fusible thermique (623) et connecté à l'unité de commande (100).

5. Appareil de cuisson électrique selon la revendication 4, dans lequel le premier fusible thermique (613) est configuré pour ouvrir le premier circuit de mesure de température (TC1) lors de la détection de la surchauffe et pour rétablir le premier circuit de mesure de température (TC1) dans son état fermé initial lorsque la surchauffe est supprimée, et
le deuxième fusible thermique (623) est configuré pour ouvrir le deuxième circuit de mesure de température (TC2) et pour rétablir le deuxième circuit de mesure de température (TC2) dans son état fermé initial lorsque la surchauffe est supprimée.

6. Appareil de cuisson électrique selon la revendication 4 ou 5, dans lequel l'unité de commande (100) est configurée pour recevoir séparément un signal de sortie du premier circuit de mesure de température (TC1) et un signal de sortie du deuxième circuit de mesure de température (TC2) lorsque l'alimentation en puissance de la première section de chauffage (31) et de la deuxième section de chauffage (32) démarre, et
l'unité de commande est configurée pour déterminer, sur la base des signaux de sortie reçus, si le premier circuit de mesure de température et le deuxième circuit de mesure de température (TC1, TC2) sont ouverts.

7. Appareil de cuisson électrique selon la revendication 6, dans lequel l'unité de commande (100) est configurée pour arrêter l'alimentation en puissance de la bobine de travail de la première section de chauffage (31) et de la bobine de travail de la deuxième section de chauffage (32) dès que l'unité de commande (100) détermine que le premier circuit de mesure de température (TC1), parmi le premier et le deuxième circuits de mesure de température (TC2), est ouvert.

8. Appareil de cuisson électrique selon la revendication 7, dans lequel l'unité de commande (100) est configurée, après l'arrêt de l'alimentation en puissance de la première section de chauffage (31), pour recevoir à nouveau un signal de sortie du premier circuit de mesure de température (TC1) et un signal de sortie du deuxième circuit de mesure de température (TC2), et pour déterminer si le premier circuit de mesure de température (TC1) est rétabli dans l'état fermé initial sur la base des signaux de sortie reçus.

9. Appareil de cuisson électrique selon la revendication 8, dans lequel l'unité de commande (100) est configurée pour redémarrer l'alimentation en puissance de la bobine de travail de la première section de chauffage (31) et de la bobine de travail de la deuxième section de chauffage (32) dès que l'unité de commande (100) détecte que le premier circuit de mesure de température (TC1) est rétabli dans l'état fermé.

10. Procédé de commande d'un appareil de cuisson électrique comprenant une plaque de recouvrement (20) sur laquelle un objet à chauffer peut être disposé ; une section de chauffage (31, 32, 33) comprenant une bobine de travail à laquelle une puissance à haute fréquence est appliquée et configurée pour chauffer l'objet à chauffer en utilisant un champ magnétique généré par la bobine de travail ; un capteur de température de plaque (611, 621, 631) disposé dans la section de chauffage (31, 32, 33) et configuré pour détecter la température de la plaque de recouvrement ; un fusible thermique (613, 623, 633) disposé dans la section de chauffage (31, 32, 33) et configuré pour détecter une surchauffe de la plaque de recouvrement (20) ; et une unité de commande (100) configurée pour fournir une puissance électrique à la bobine de travail, le capteur de température de plaque (611, 621, 631) et le fusible thermique (613, 623, 633) étant électriquement connectés à l'unité de commande,
dans lequel le procédé, par l'unité de commande (100), comprend l'arrêt de l'alimentation en puissance de la bobine de travail lorsqu'une surchauffe de la plaque de recouvrement (200) se produit,
**caractérisé en ce que** le capteur de température de plaque (611, 621, 631) et le fusible thermique (613, 623, 633) sont connectés en série l'un avec l'autre et connectés à l'unité de commande (100) pour former un circuit de mesure de température (TC1, TC2, TC3), et
en outre **caractérisé en ce que** le procédé comprend :
par le fusible thermique (613, 623, 633), lors de la détection de la surchauffe, l'ouverture du circuit de mesure de température (TC1, TC2, TC3), et, lorsque la surchauffe est supprimée, le rétablissement automatique du circuit de mesure de température (TC1, TC2, TC3) dans son état fermé initial.

11. Procédé selon la revendication 10, dans lequel la section de chauffage (31, 32, 33) de l'appareil de cuisson électrique comprend une première section de chauffage (31) et une deuxième section de chauffage (32) espacées l'une de l'autre d'une distance prédéterminée, le capteur de température de plaque (611, 621, 631) comprend un premier capteur de température de plaque (611) disposé dans la première section de chauffage (31) et un deuxième capteur de température de plaque (621) disposé dans la deuxième section de chauffage (32), et le fusible thermique (613, 623, 633) comprend un premier fusible thermique (613) disposé dans la première section de chauffage (31) et un deuxième fusible thermique (623) disposé dans la deuxième section de chauffage (32),
dans lequel le circuit de mesure de température comprend (TC1, TC2, TC3) un premier circuit de mesure de température (TC1) formé par une connexion en série avec le premier capteur de température de plaque (611) et le premier fusible thermique (613) et connecté à l'unité de commande (100), et un deuxième circuit de mesure de température (TC2) formé par une connexion en série avec le deuxième capteur de température de plaque (621) et le deuxième fusible thermique (623) et connecté à l'unité de commande (100),
dans lequel le procédé comprend en outre :
par le premier fusible thermique (613), lors de la détection de la surchauffe, l'ouverture du premier circuit de mesure de température (TC1), et, lorsque la surchauffe est supprimée, le rétablissement du premier circuit de mesure de température (TC1) dans son état fermé initial.

12. Procédé selon la revendication 11, comprenant :
par l'unité de commande (100), la réception séparée d'un signal de sortie du premier circuit de mesure de température (TC1) et d'un signal de sortie du deuxième circuit de mesure de température (TC2) lorsque l'alimentation en puissance de la première section de chauffage (31) et de la deuxième section de chauffage (32) démarre, et la détermination, sur la base des signaux de sortie reçus, de l'ouverture du premier circuit de mesure de température (TC1) et du deuxième circuit de mesure de température (TC2).

13. Procédé selon la revendication 12, comprenant en outre :
par l'unité de commande (100), l'arrêt de l'alimentation en puissance de la bobine de travail de la première section de chauffage (31) et de la bobine de travail de la deuxième section de chauffage (32) dès qu'il est déterminé que le premier circuit de mesure de température (TC1), parmi le premier et le deuxième circuits de mesure de température (TC1, TC2), est ouvert.

14. Procédé selon la revendication 13, comprenant en outre :
par l'unité de commande (100), la réception séparée à nouveau d'un signal de sortie du premier circuit de mesure de température (TC1) et d'un signal de sortie du deuxième circuit de mesure de température (TC2) après l'arrêt de l'alimentation en puissance de la première section de chauffage (31), et la détermination, sur la base des signaux de sortie reçus, de la remise du premier circuit de mesure de température (TC1) dans son état fermé initial.

15. Procédé selon la revendication 14, comprenant en outre :
le redémarrage de l'alimentation en puissance de la bobine de travail de la première section de chauffage (31) et de la bobine de travail de la deuxième section de chauffage (32) lorsqu'il est détecté que le premier circuit de mesure de température (TC1) est rétabli dans l'état fermé initial.
